# EUROPÄISCHE PATENTSCHRIFT

(11) **EP 2 460 035 B1**
(45) Veröffentlichungstag und Bekanntmachung des Hinweises auf die Patenterteilung: **11.11.2020**
(21) Anmeldenummer: 10737264.1
(22) Anmeldetag: 06.07.2010
(51) Int. Cl.: G02B 1/10, G02B 27/00, G02B 1/11

(54) **VERFAHREN ZUR HERSTELLUNG VON BESCHICHTUNGEN MIT ANTIREFLEXIONSEIGENSCHAFTEN**
METHOD FOR PRODUCING COATINGS HAVING ANTI-REFLECTION PROPERTIES
PROCÉDÉ DE FABRICATION DE REVÊTEMENTS À PROPRIÉTÉS ANTIREFLET

(30) Priorität: 31.07.2009 DE 102009035797
(43) Veröffentlichungstag der Anmeldung: 06.06.2012
(73) Patentinhaber: Leibniz-Institut für Neue Materialien gemeinnützige GmbH, 66123 Saarbrücken (DE)
(72) Erfinder: de OLIVEIRA, Peter William, 66123 Saarbrücken (DE); JILAVI, Mohammad, 66459 Kirkel (DE); SHANMUGASUNDARAM, Sakthivel, 500057 Hyderabad (IN); VEITH, Michael, 66386 St.-Ingbert (DE)
(74) Vertreter: Patentanwälte Gierlich & Pischitzis Partnerschaft mbB
(86) Internationale Anmeldenummer: PCT/EP2010/004076
(87) Internationale Veröffentlichungsnummer: WO 2011/012214

(56) Entgegenhaltungen:
- WO-A1-2007/053772
- WO-A2-2008/021817
- DE-A1- 10 323 729
- DE-T2-602004 012 606
- US-A1- 2004 197 550
- US-A1- 2004 258 929
- US-A1- 2009 015 926
- ZHANG X-T ET AL: "Self-Cleaning Particle Coating with Antireflection Properties" CHEMISTRY OF MATERIALS, AMERICAN CHEMICAL SOCIETY, WASHINGTON, US LNKD- DOI:10.1021/CM0484201, Bd. 17, Nr. 3, 14. Januar 2005 (2005-01-14), Seiten 636-700, XP008101432 ISSN: 0897-4756

## Beschreibung

### Gebiet der Erfindung

Die Erfindung betrifft ein Verfahren zur Herstellung von Beschichtungen mit Antireflexionseigenschaften. Außerdem betrifft die Erfindung ein Verfahren zur Herstellung von Beschichtungen, welche zusätzlich noch beschlagmindernde, superhydrophile und/oder selbstreinigende Funktionen aufweisen.

### Stand der Technik

Beschichtungen mit Antireflexionseigenschaften werden mit vielen unterschiedlichen Techniken hergestellt. Eine davon ist beispielsweise die Sol-Gel Technik. Solche Beschichtungen können eine hohe Transparenz und hohe mechanische Stabilität aufweisen.

So beschreiben die Schriften US 2008/0268229 A1 und WO 2008/021817 A2 solche Beschichtungen, welche allerdings nur durch das mehrfache Aufbringen mehrerer unterschiedlicher Beschichtungszusammensetzungen erzeugen lassen. Zusätzlich wird nach zum Erreichen ausreichender Stabilität eine Temperaturbehandlung bei 550 °C benötigt. Dadurch sind diese Beschichtungen nicht für temperaturempflindliche Substrate geeignet.

Durch die Anzahl der benötigten Schritte und unterschiedlichen Beschichtungszusammensetzungen sind diese Verfahren teuer und aufwendig und auch nicht für große Flächen geeignet.

US 2004/1197550 A1 beschreibt ebenfalls ein mehrstufiges Verfahren bei dem zwei Beschichtungsschritte durchgeführt werden.

Zhang X-T et al. "Self-cleaning Particle Coating with Antireflection Properties" Chemistry of Materials 2005, 17(3), 636-700 beschreibt die Beschichtung mit einem Verfahren bei dem zwei Zusammensetzungen mit unterschiedlichen Partikelgrößen nacheinander aufgetragen werden.

US 2009/1015926 A1 beschreibt eine Beschichtung mit organischen und anorganischen Partikeln mit Teilchendurchmessern von über 0.5 µm.

Temperaturempfindliche Substrate werden meistens mit Hilfe von Gasphasenabscheidung beschichtet, was ebenfalls ein sehr teures und aufwendiges Verfahren ist.

### Aufgabe

Aufgabe der Erfindung ist es, ein Verfahren anzugeben, das die Herstellung von Antireflexionsbeschichtungen auf einfache Weise erlaubt. Zusätzlich soll das Verfahren ermöglichen, auf gleiche Weise Oberflächen mit superhydrophilen und Antibeschlageigenschaften zu erzeugen.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindung umfasst auch alle sinnvollen und insbesondere alle erwähnten Kombinationen von unabhängigen und/oder abhängigen Ansprüchen.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Die Erfindung betrifft ein Verfahren zur Herstellung von Beschichtungen mit Antireflexionseigenschaften. Dabei wird in einem ersten Schritt eine Zusammensetzung aus mindestens einer Art von Nanopartikeln und mindestens einem Lösungsmittel hergestellt. Unter Art von Nanopartikel wird dabei im Sinne der Erfindung eine Menge an Nanopartikeln verstanden, welche in ihren charakteristischen Parametern wie Größe (mittlerer Durchmesser, Größenverteilung), chemische Zusammensetzung, innere Struktur (Porosität, Kristallinität), ggf. Oberflächenmodifizierung übereinstimmt. Üblicherweise können solche Parameter über den Herstellungsprozess der Nanopartikel eindeutig eingestellt werden.

Unter Nanopartikel im Sinne der Erfindung werden Partikel verstanden, welche einen mittleren Teilchendurchmesser von unter 1 µm aber mehr als 1 nm aufweisen (mittlere Teilchengröße gemessen mit HTEM), erfindungsgemäß von unter 250 nm, besonders bevorzugt unter 100 nm. Die Teilchen weisen bevorzugt einen Durchmesser zwischen 1 und 50 nm auf.

Die Zusammensetzung kann beispielsweise durch Dispergieren der Nanopartikel in einem entsprechenden Lösungsmittel oder Lösungsmittelgemisch geschehen. Erfindungsgemäß hat die Zusammensetzung einen Gesamtgehalt an Nanopartikeln von über 1 Gew.-%, bevorzugt über 2 Gew.-%, besonders bevorzugt zwischen 1 Gew.-% und 10 Gew.-%, insbesondere zwischen 2 Gew.-% und 5 Gew.-%.

Die Zusammensetzung enthält mindestens zwei Arten von Nanopartikeln, welche sich in mindestens einer Eigenschaft ausgewählt aus Größe (mittlerer Durchmesser, Größenverteilung), chemische Zusammensetzung, innere Struktur (Porosität, Kristallinität) unterscheiden.

In einer bevorzugten Ausführungsform der Erfindung unterscheiden sich die mindestens zwei Arten von Nanopartikeln in ihrer mittleren Teilchengröße um mindestens Faktor 2, bevorzugt um den Faktor 2 bis 10 (gemessen mit Ultrafine particle Analyzer).

Erfindungsgemäß handelt es sich bei mindestens einer Art von Nanopartikeln, um durch eine Karbonsäure stabilisierte Nanopartikel. Die Stabilisierung von Nanopartikeln verhindert die Bildung von Agglomeraten, welche zu Trübung in der Beschichtung führen können. Gleichzeitig bestimmt die Ladung der Nanopartikel auch ihre Wechselwirkung untereinander oder bei Verwendung von mehreren Arten von Nanopartikeln auch die Wechselwirkung zwischen den unterschiedlichen Arten von Nanopartikeln. Bei Stabilisierung durch eine Karbonsäure, wird angenommen, dass sich die Karbonsäure an die Oberfläche der Nanopartikel anlagert. Dadurch erhalten die Partikel eine relativ inerte Oberfläche. Als Karbonsäuren eignen sich alle ein- und mehrbasischen Carbonsäuren mit 2 - 8 C-Atomen, also z.B. Essigsäure, Propionsäure, Oxalsäure, Glutarsäure, Maleinsäure, Bernsteinsäure, Phthalsäure, Adipinsäure, Korksäure. Bevorzugt geeignet sind die Hydroxycarbonsäuren und Fruchtsäuren wie z.B. Glycolsäure, Milchsäure, Zitronensäure, Äpfelsäure, Weinsäure und Gluconsäure. Besonders bevorzugt werden Säuren, welche bei Behandlung bei niedrigen Temperaturen entfernt werden können, wie z.B. Essigsäure, Propionsäure oder Oxalsäure. Durch die Karbonsäure wird auch die Oberflächenladung der Partikel verändert.

In einer weiteren Ausführungsform der Erfindung umfassen die Nanopartikel ein oder mehrere Oxide von einem oder mehreren Metallen oder Halbmetallen ausgewählt aus Mg, Si, Ge, A1, B, Zn, Cd, Ti, Zr, Ce, Sn, In, La, Fe, Cu, Ta, Nb, V, Mo oder W. Bevorzugt umfassen die Nanopartikel Verbindungen ausgewählt aus TiO₂, SiO₂, ZrO₂, SnO₂, Al₂O₃, AlOOH, Ta₂O₅, Indium-Zinn-Oxid (ITO), Antimon-Zinn-Oxid (ATO) oder fluor-dotiertes Zinnoxid (FTO).

Die Zusammensetzung umfasst mit Karbonsäure stabilisierte Nanopartikel aus SiO₂ und als mindestens eine weitere Art von Nanopartikeln TiO₂-Nanopartikel .

Das Verhältnis von SiO₂-Nanopartikeln zu den TiO₂-Nanopartikeln beträgt nach Gew.-% zwischen 1:1 und 20:1, bevorzugt zwischen 4:1 und 10:1, besonders bevorzugt zwischen 5:1 und 7:1.

Die SiO₂-Nanopartikel sind deutlich größer als die TiO₂-Nanopartikel. Die mittlere Teilchengröße der SiO₂-Nanopartikel ist 2- bis 10-mal größer als die mittlere Teilchengröße der TiO₂-Nanopartikel.

In einer weiteren Ausführungsform der Erfindung enthält die Zusammensetzung mindestens zwei Lösungsmittel. Mit Vorteil sind es Lösungsmittel mit einem Siedepunkt von unter 200 °C, bevorzugt von unter 150 °C (unter Normalbedingungen). Bevorzugt sind polare Lösungsmittel.

Mit Vorteil enthält die Zusammensetzung mindestens ein Lösungsmittel ausgewählt aus der Gruppe enthaltend C₁-C₈-Alkohole (wie Methanol, Ethanol, Propanol, 2-Propanol, 1-Methyl-2-Propanol, Butanol, 2-Butanol, Ethylenglycol), C₁-C₈-Ketone (wie Aceton, 2-Butanon, 2-Pentanon, 3-Pentanon, 2-Methyl-2-butanon) C₁-C₈-Aldehyde (Ethanal, Propanal, Butanal, Pentanal), Wasser. Es können auch andere polare Lösungsmittel, wie Tetrahydrofuran oder Ether verwendet werden. Es können auch Mischungen dieser Lösungsmittel verwendet werden.

In einer weiteren Ausführungsform enthalt die Zusammensetzung mindestens zwei Lösungsmittel. In einer bevorzugten Ausführungsform sind der Hauptbestandteil der Zusammensetzung nichtwässrige Lösungsmittel, insbesondere Alkohole.

In einer weiteren Ausführungsform enthält die Zusammensetzung keine weiteren Additive, wie Benetzungsmittel oder Polymere. Dies bedeutet dass die Zusammensetzung weitgehend frei von organischen Substanzen ist, welche sich nicht durch eine Temperaturbehandlung von über 50, bevorzugt über 80 °C entfernen lassen.

Normalerweise kann die Zusammensetzung durch Vermischen von einem oder mehreren Suspensionen der Nanopartikel mit einem oder mehreren Lösungsmitteln erhalten werden. Eine Einstellung eines bestimmten pH-Werts ist nicht notwendig.

Im nächsten Schritt wird die Zusammensetzung auf ein Substrat aufgebracht. Als Substrat kann dabei jede beliebige Oberfläche, welche zum Beschichten geeignet ist verwendet werden. Bevorzugt sind transparente Substrate wie Glas, Polykarbonate (PC), Polymethylmetacrylate (PMMA), Polyethylen (PE), Polystyrol, Polyvinylchlorid oder ähnliche transparente Kunststoffe.

Zum Aufbringen der Zusammensetzung können beliebige Techniken zum Aufbringen von flüssigen oder viskosen Zusammensetzungen verwendet werden, wie beispielsweise Sprühen, Tauchen, Rakeln, Rollen.

Die Dicke der aufgebrachten Zusammensetzung liegt bevorzugt zwischen 20 und 600 nm, abhängig von der gewünschten Wellenlänge. Bevorzugt ist ein Vielfaches eines Viertels der gewünschten Wellenlänge, d.h. z.B. 125 nm bei einer Wellenlänge von 500 nm. Bei der Temperaturbehandlung kann sich die Dicke noch verändern.

In einer weiteren bevorzugten Ausführungsform wird die Zusammensetzung nur einmal aufgetragen. Dies bedeutet, dass eine erfindungsgemäße Beschichtung schon nach einmaligem Durchführen des Verfahrens erhalten werden kann.

Nach dem Auftragen wird das beschichtete Substrat einer Temperaturbehandlung unterzogen.

In einer weiteren Ausführungsform wird die Temperaturbehandlung bei unter 200 °C durchgeführt (Niedrigtemperaturbehandlung), bevorzugt zwischen 50 °C und 150 °C, besonders bevorzugt zwischen 80 °C und 120 °C. Die Behandlung kann zwischen 5 Minuten und 5 Stunden dauern, bevorzugt zwischen 30 Minuten und 2 Stunden. Diese Ausführungsform ermöglicht die Herstellung von Antireflexionsbeschichtungen auf temperaturempfindlichen Substraten, wie Kunststoffen.

Die hergestellten Beschichtungen weisen hohe mechanische Stabilität, hohe Transmission (>97 %), geringe Reflexion im sichtbaren Bereich (<2 %) auf.

In einer weiteren Ausführungsform wird die Temperaturbehandlung bei über 400 °C durchgeführt (Hochtemperaturbehandlung), besonders bevorzugt zwischen 400 °C und 700 °C, besonders bevorzugt zwischen 450 °C und 600 °C. Die Behandlung kann dabei von 1 Minute bis 2 Stunden dauern. Als Heizrate können 1 bis 10 °C/Min verwendet werden, bevorzugt 5 °C/Minute. Die Behandlung bei hoher Temperatur führt nicht nur zur Ausbildung von Antireflexionseigenschaften, sondern die Schichten können noch zusätzlich Antibeschlag- und superhydrophile Eigenschaften aufweisen. Die kann dadurch begünstigt sein, dass die Nanopartikel der Beschichtung sich bei den hohen Temperaturen besser verbinden und es zur Ausbildung von Hohlräumen und Poren kommt. Beide Temperaturbehandlungen können auch nacheinander angewendet werden.

Das Verfahren ist insbesondere für die industrielle Fertigung geeignet. So muss nur eine Zusammensetzung hergestellt werden und in einer bevorzugten Ausführungsform können die Beschichtungen in nur einem Beschichtungsschritt erhalten werden. Dadurch können auch große Flächen einfach beschichtet werden. Die Temperaturbehandlung bei geringer Temperatur ermöglicht auch die Beschichtung von temperaturempfindlichen Substraten.

Die erfindungsgemäßen Beschichtungen können auch auf beschichtete Substrate aufgebracht werden. Außerdem können noch weitere Beschichtungen aufgetragen werden.
Mit dem erfindungsgemäßen Verfahren wird eine Antireflexionsbeschichtung erhalten. Es handelt sich um eine Beschichtung umfassend SiO₂-Nanopartikel und als mindestens eine weitere Art an Nanopartikeln TiO₂-Nanopartikel wie für das Verfahren beschrieben.

In einer bevorzugten Ausführungsform der Erfindung enthält die Beschichtung mindestens 2 Arten von Nanopartikeln, welche sich in ihrer mittleren Teilchengröße um mindestens Faktor 2 unterscheiden, bevorzugt um den Faktor 2 bis 10.

In einer weiteren Ausführungsform der Erfindung enthält die Beschichtung eine homogene Verteilung der mindestens 2 Arten von Nanopartikeln. Dies wird insbesondere dadurch begünstigt, dass die mindestens 2 Arten von Nanopartikeln bereits vor dem Auftragen auf das Substrat in der Zusammensetzung als Gemisch vorliegen. Dadurch können sich die beiden Arten von Partikeln aneinander anlagern. Dabei lagern sie sich mit Vorteil so aneinander an, dass die eine Art von Nanopartikel die andere Art von Nanopartikeln homogen belegt. Bei Vorliegen eines Größenunterschieds kommt es zur homogenen Belegung der größeren Nanopartikel durch die kleineren Nanopartikeln. Dies ermöglicht die Herstellung einer homogenen Beschichtung. Eine solche Anlagerung der Nanopartikel kann auch bereits in der Zusammensetzung nachgewiesen werden.

Durch das Verfahren wird eine Zusammensetzung hergestellt, welche mindestens eine Art von Nanopartikeln aufweist, welche von einer zweiten Art an Nanopartikeln homogen belegt sind, insbesondere handelt es sich um eine Zusammensetzung wie für das Verfahren beschrieben.

Die Zusammensetzung umfasst zwei Arten von Nanopartikeln, welche sich in ihrer mittleren Teilchengröße um mindestens den Faktor 2, bevorzugt Faktor 2 bis 10 unterscheiden, wobei die kleineren

Teilchen die größeren Teilchen homogen belegen, d.h. sich gleichmäßig auf deren Oberfläche angelagert haben.

Die Erfindung betrifft außerdem die Verwendung einer Beschichtung oder Beschichtung hergestellt mit dem beschriebenen Verfahren für Antireflexbeschichtungen, insbesondere für transparente Substrate, optische Elemente, Linsen, Brillengläser, Bildschirme, Handydisplays, Smartphones, Touchscreens.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

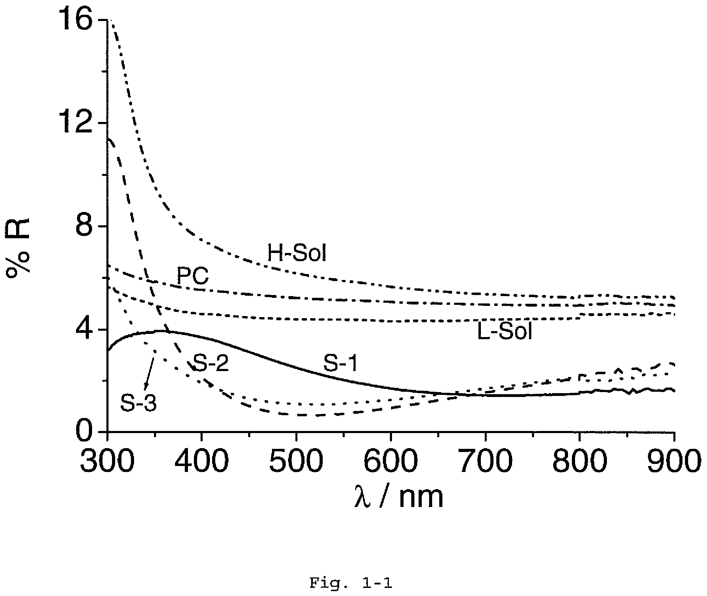

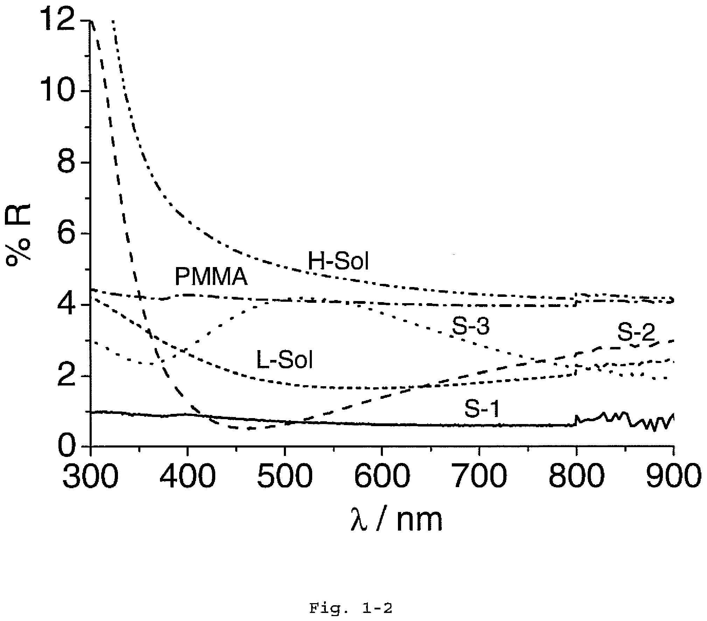

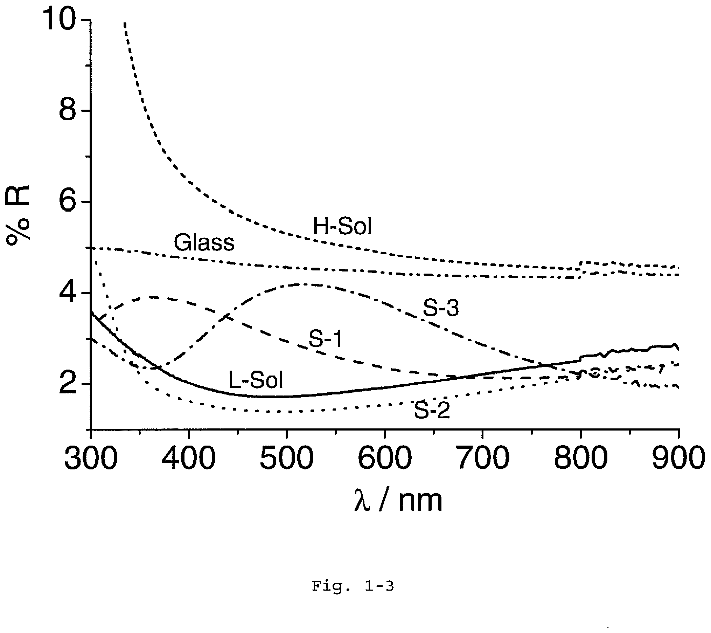

- Fig. 1-1: Reflexionsspektrum der Beschichtungen auf Polykarbonat (PC) ;
- Fig. 1-2: Reflexionsspektrum der Beschichtungen auf PMMA;
- Fig. 1-3: Reflexionsspektrum der Beschichtungen auf Glas;
- Fig. 2-1: Transmissionsspektrum der Beschichtungen auf Polycarbonat;
- Fig. 2-2: Transmissionsspektren der Beschichtungen auf PMMA;

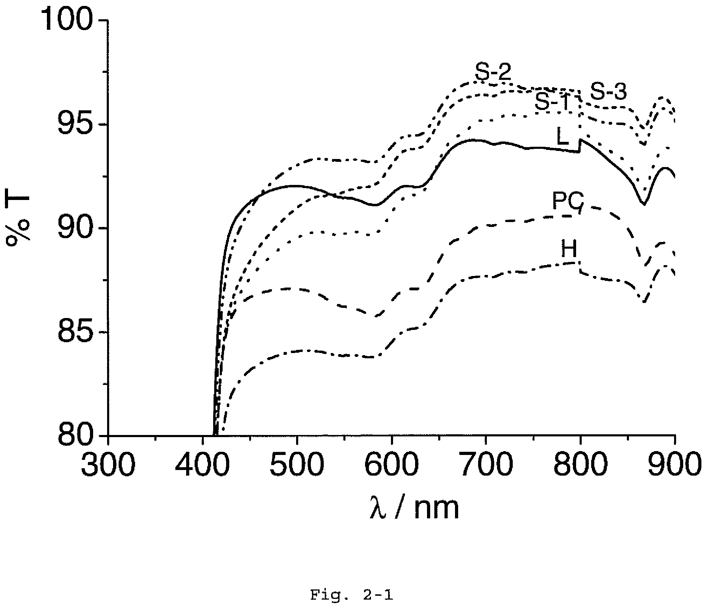

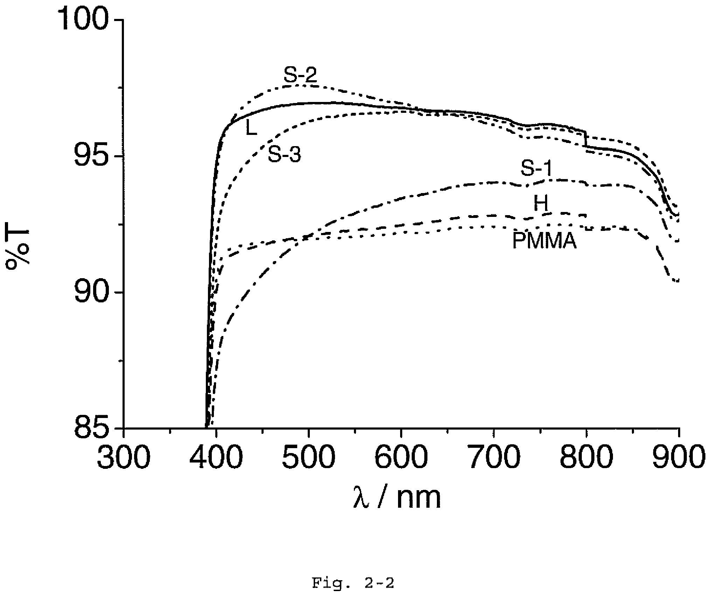

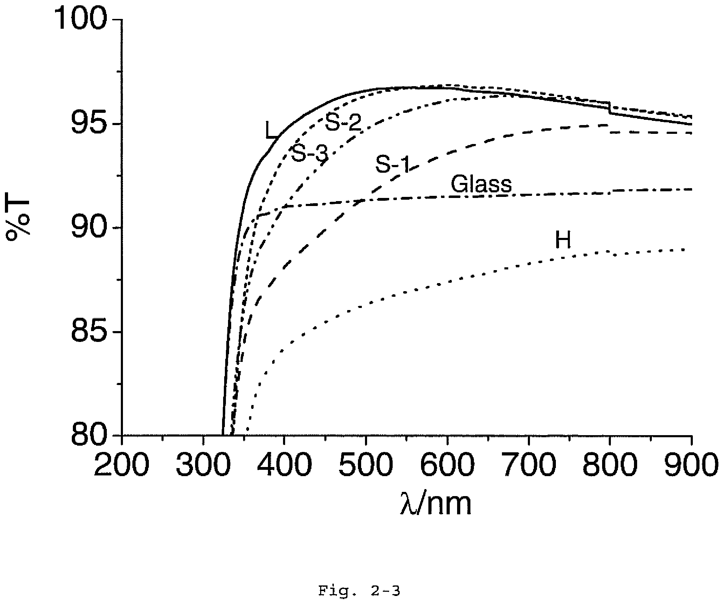

- Fig. 2-3: Transmissionsspektrum der Beschichtungen auf Glas;

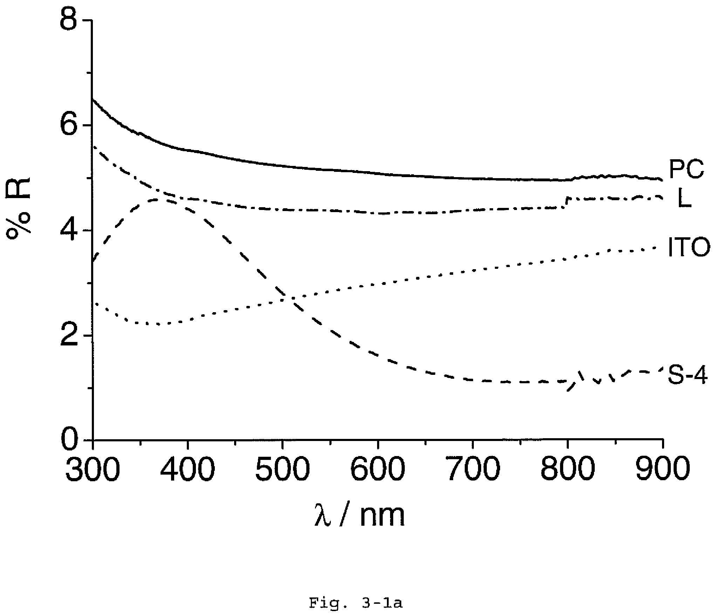

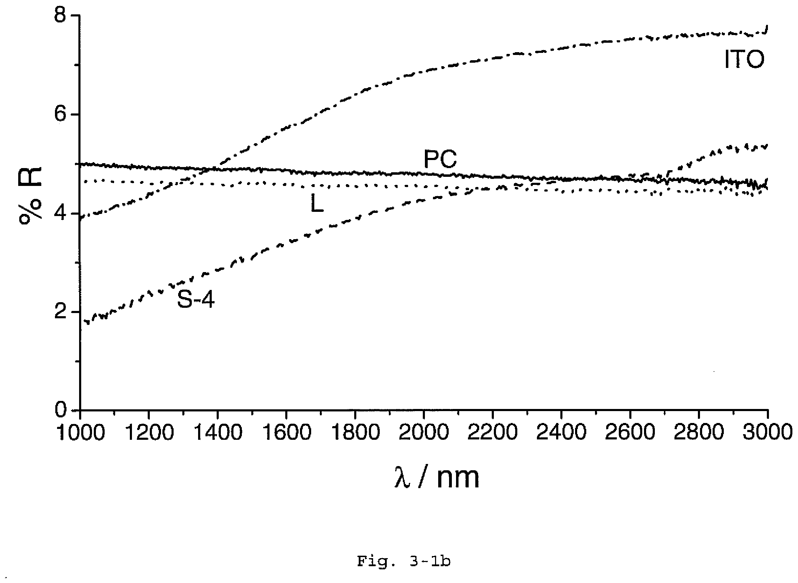

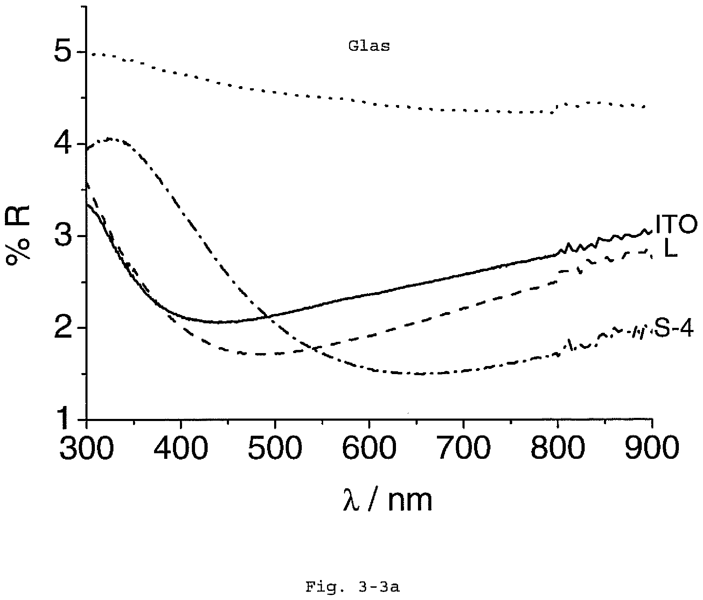

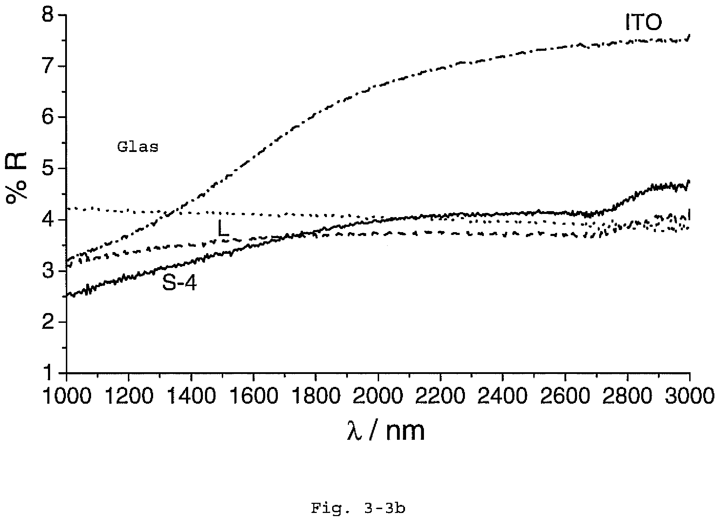

- Fig. 3-1a: Reflexionsspektrum von Beschichtungen mit ITO (Bereich sichtbares Licht) auf Polycarbonat;
- Fig. 3-1b: Reflexionsspektrum von Beschichtungen mit ITO (IR-Region) auf Polycarbonat;

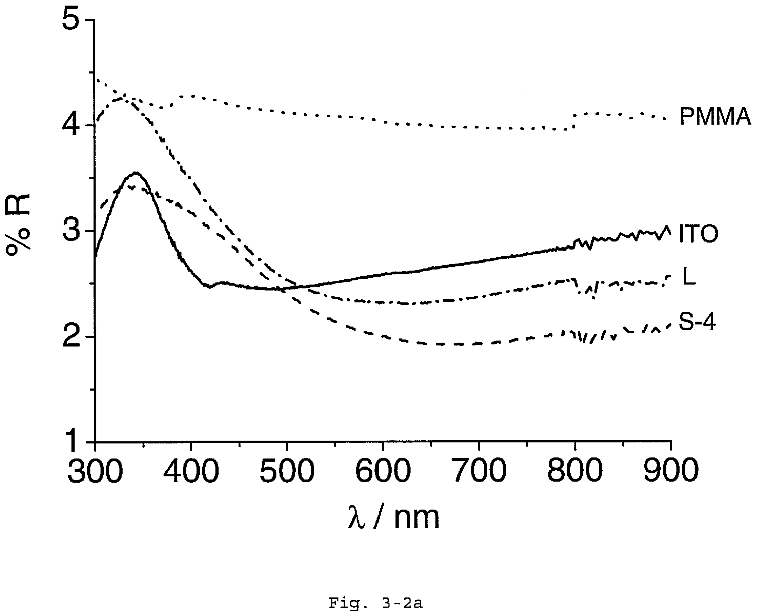

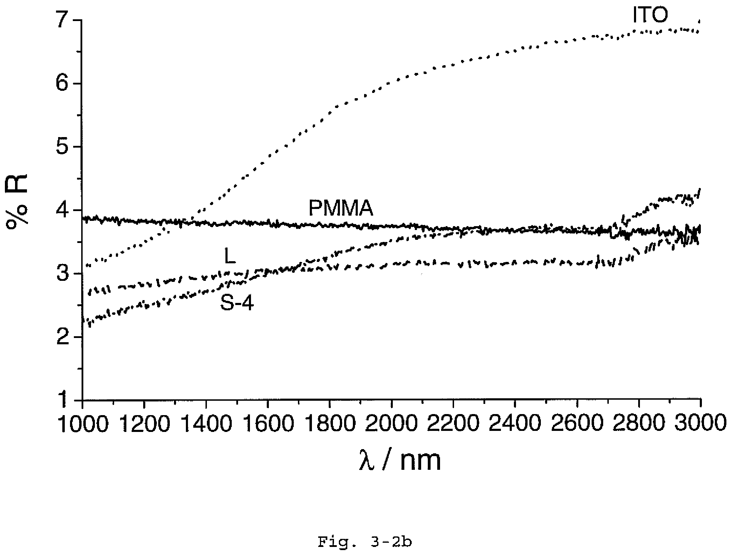

- Fig. 3-2a: Reflexionsspektrum von Beschichtungen mit ITO (Bereich sichtbares Licht) auf PMMA;
- Fig. 3-2b: Reflexionsspektrum von Beschichtungen mit ITO (IR-Region) auf PMMA;
- Fig. 3-3a: Reflexionsspektrum von Beschichtungen mit ITO (Bereich sichtbares Licht) auf Glas;
- Fig. 3-3b: Reflexionsspektrum von Beschichtungen mit ITO (IR-Region) auf Glas;

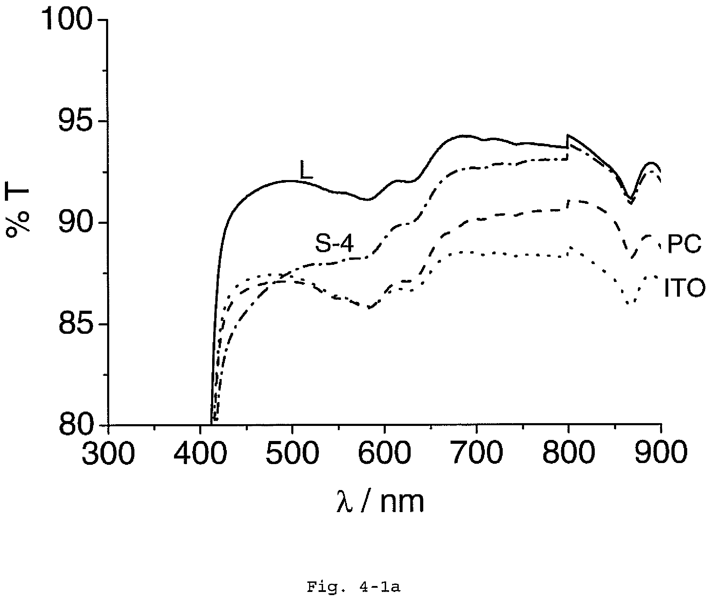

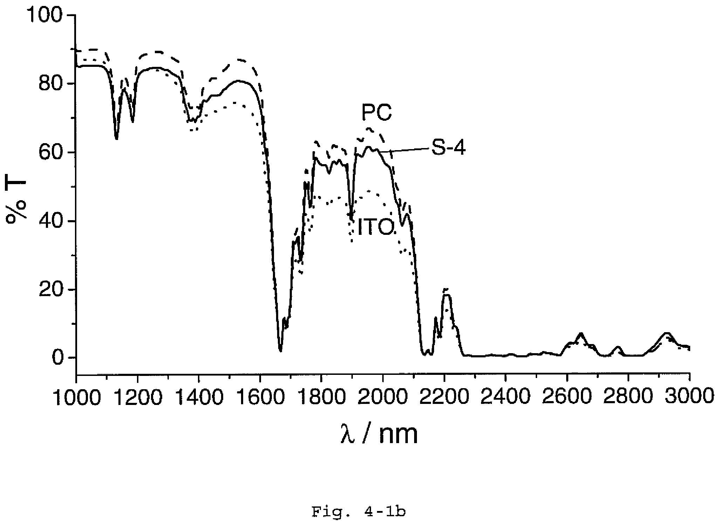

- Fig. 4-1a: Transmissionsspektrum von Beschichtungen mit ITO (Bereich sichtbares Licht) auf Polycarbonat;
- Fig. 4-1b: Transmissionsspektrum von Beschichtungen mit ITO (IR-Region) auf Polycarbonat;

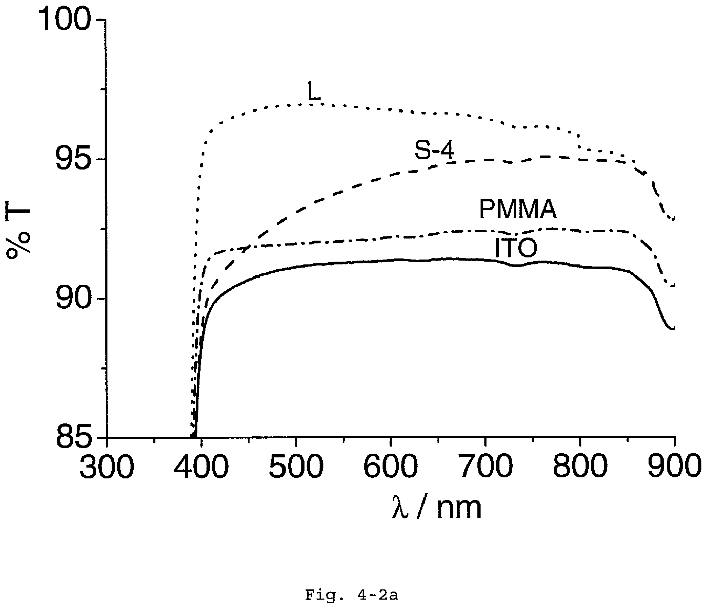

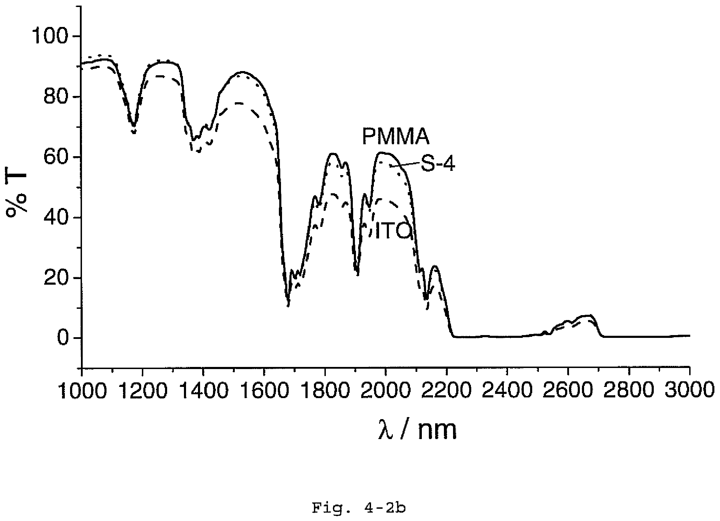

- Fig. 4-2a: Transmissionsspektrum von Beschichtungen mit ITO (Bereich sichtbares Licht) auf PMMA;
- Fig. 4-2b: Transmissionsspektrum von Beschichtungen mit ITO (IR-Region) auf PMMA;

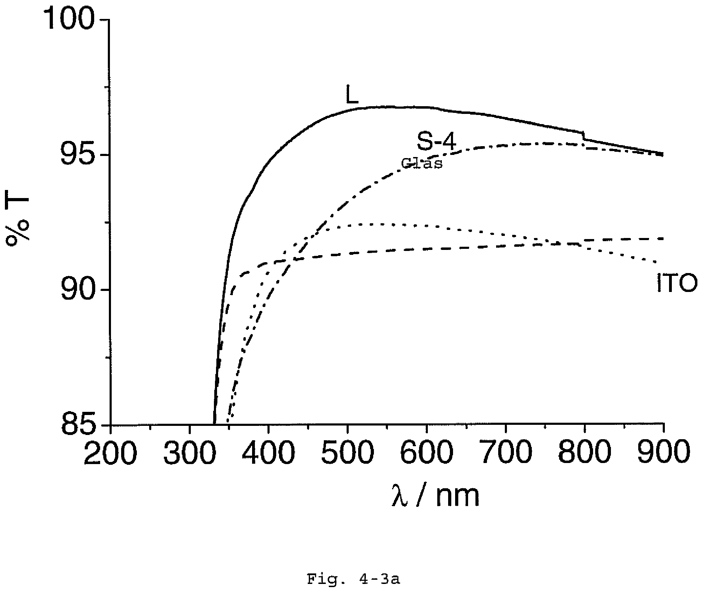

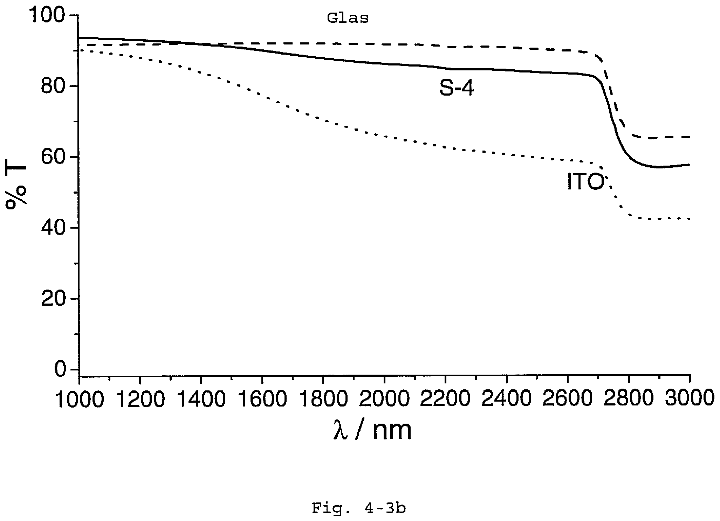

- Fig. 4-3a: Transmissionsspektrum von Beschichtungen mit ITO (Bereich sichtbares Licht) auf Glas;
- Fig. 4-3b: Transmissionsspektrum von Beschichtungen mit ITO (IR-Region) auf Glas;

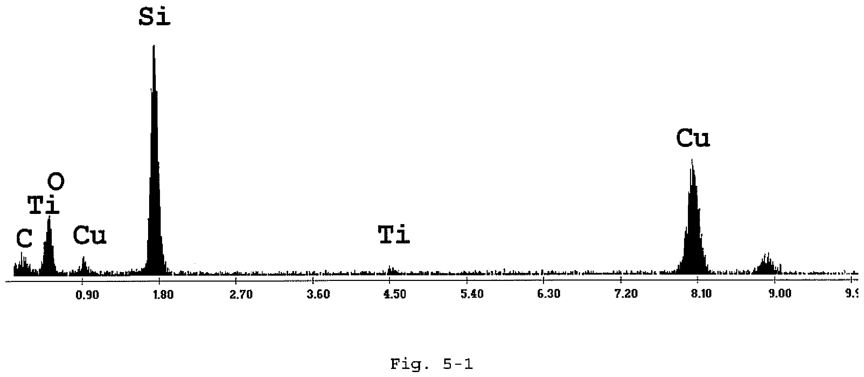

- Fig. 5-1: EDX-Spektrum der Zusammensetzung S1;

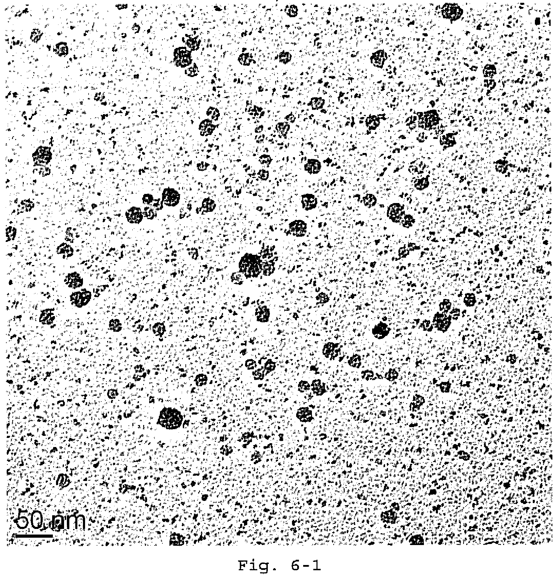

- Fig. 6-1: TEM-Aufnahme der Zusammensetzung S1;

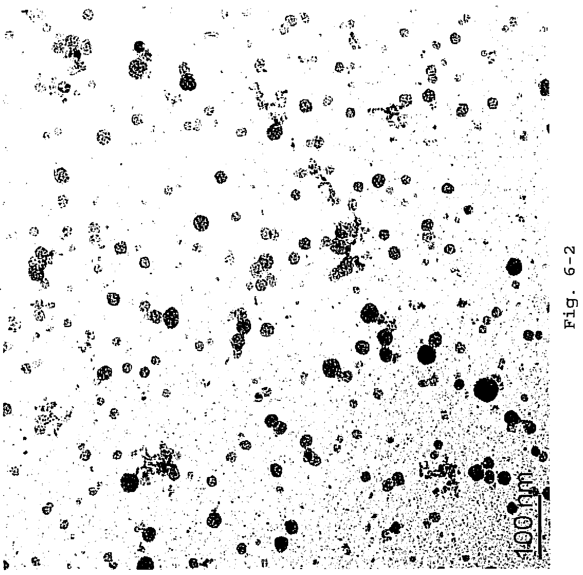

- Fig. 6-2: TEM- Aufnahme der Zusammensetzung S2;

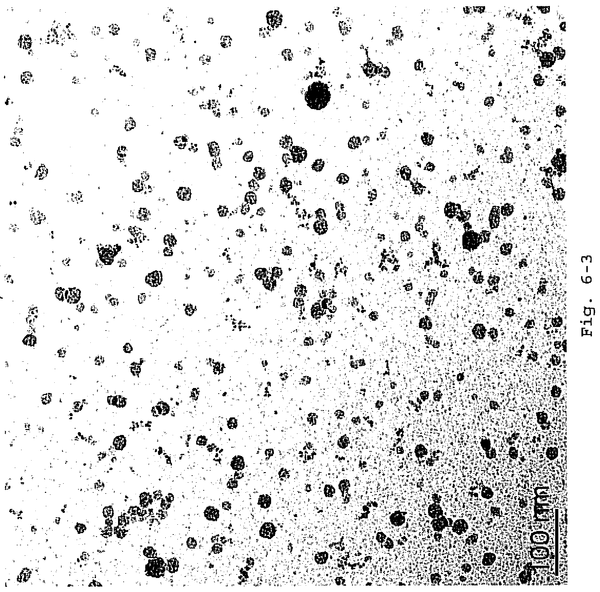

- Fig. 6-3: TEM- Aufnahme der Zusammensetzung S3;

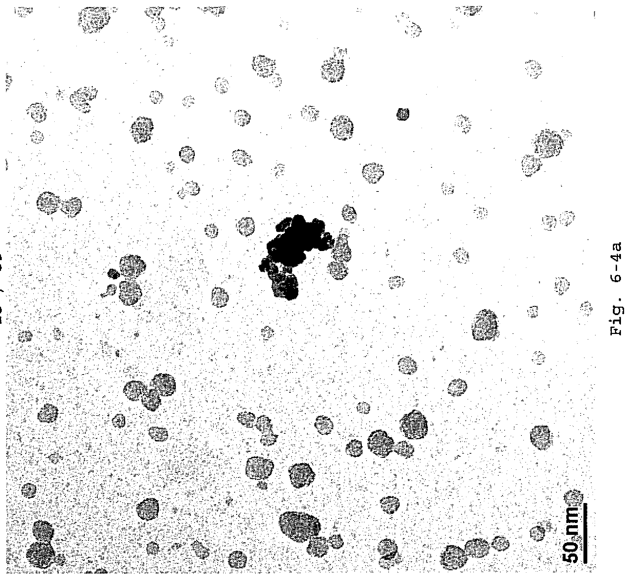

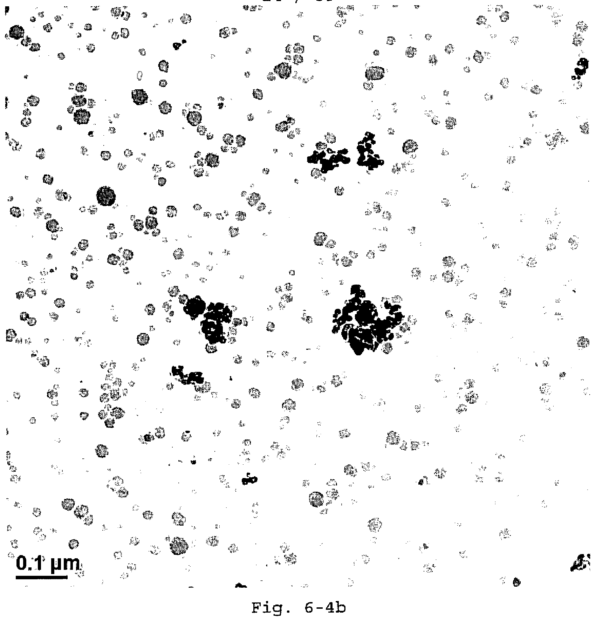

- Fig. 6-4a: TEM- Aufnahme der Zusammensetzung S4 (ITO);
- Fig. 6-4b: TEM- Aufnahme der Zusammensetzung S4 (ITO);

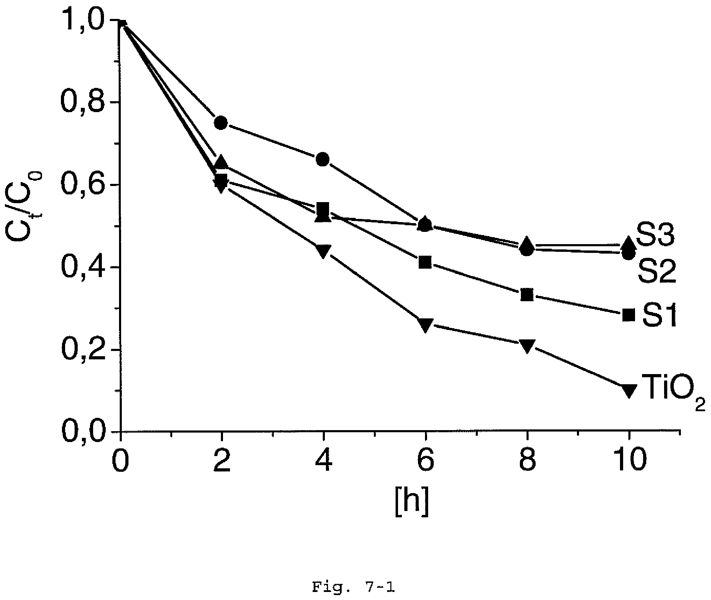

- Fig. 7-1: Messung der photokatalytischen Aktivität;

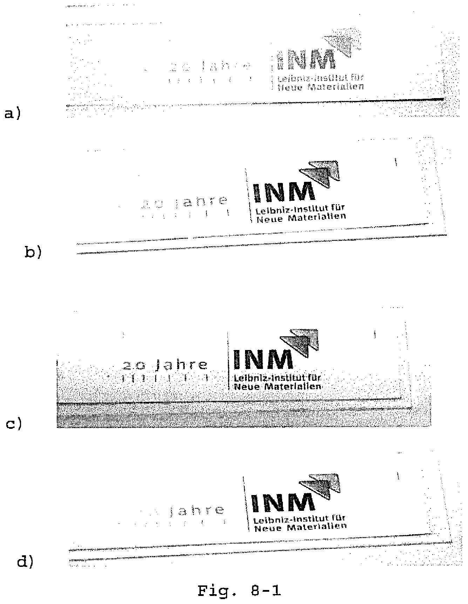

- Fig. 8-1: Vergleich der Antibeschlagfähigkeit verschiedener Proben a) Glas b) S1 c) S2 d) S3;

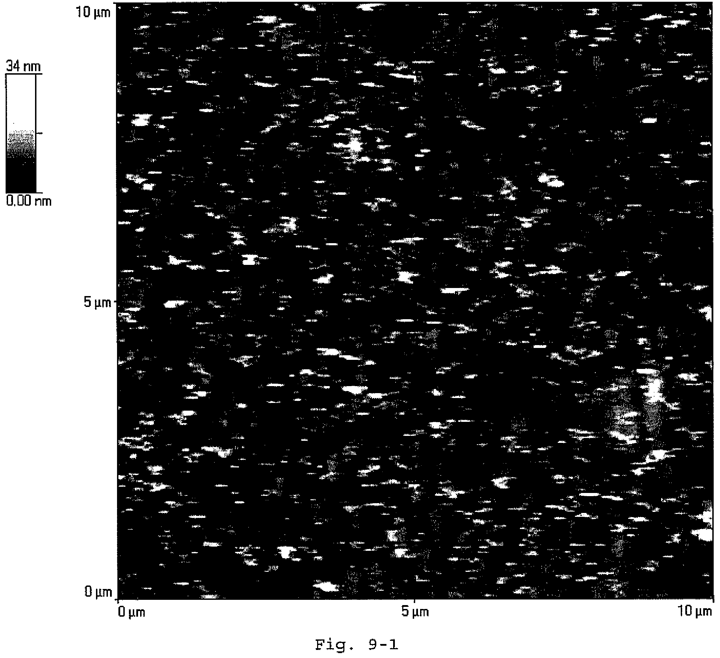

- Fig. 9-1: AFM-Messung der Beschichtung mit Zusammensetzung L auf PMMA;

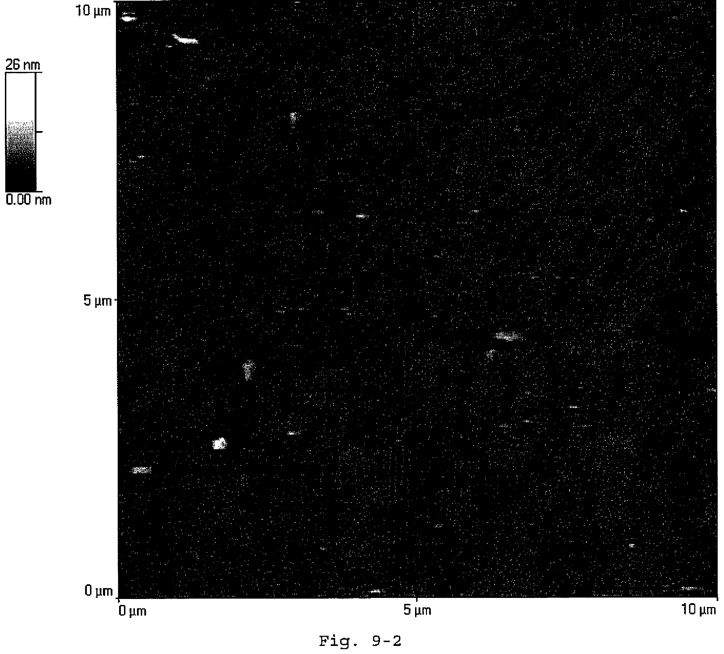

- Fig. 9-2: AFM-Messung der Beschichtung mit Zusammensetzung H-2 auf PMMA;

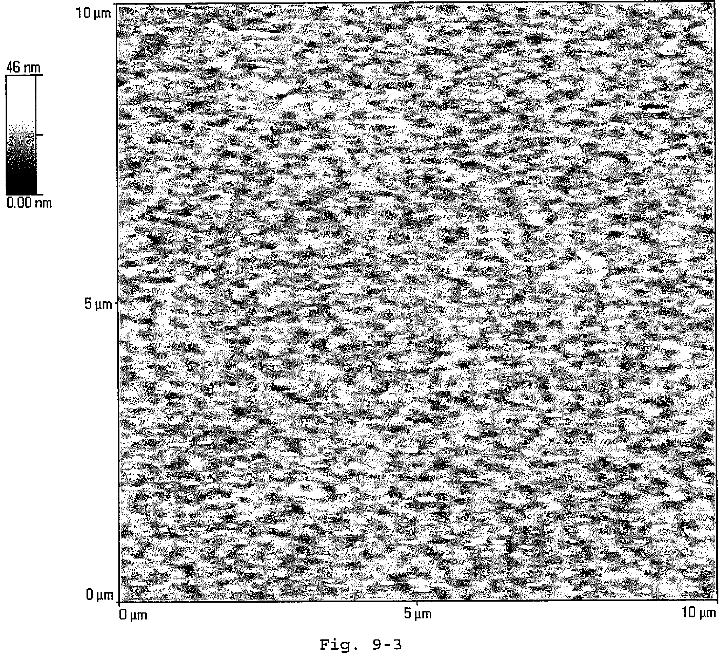

- Fig. 9-3: AFM-Messung der Beschichtung mit Zusammensetzung S2 auf PMMA;

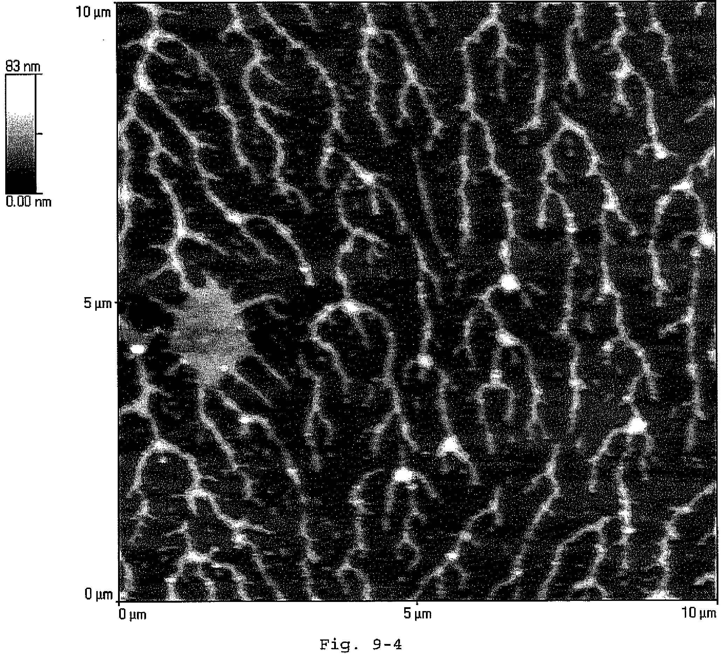

- Fig. 9-4: AFM-Messung der Beschichtung mit Zusammensetzung L auf Polykarbonat;

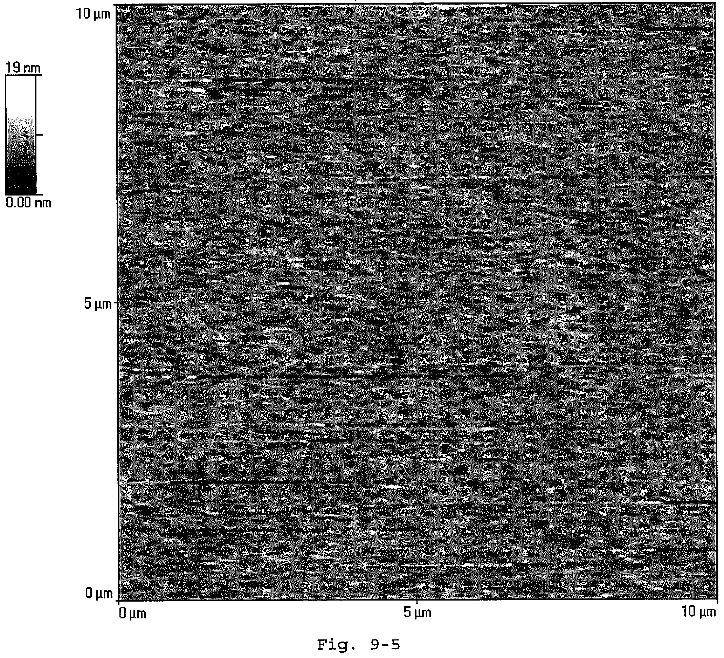

- Fig. 9-5: AFM-Messung der Beschichtung mit Zusammensetzung H auf Polykarbonat;

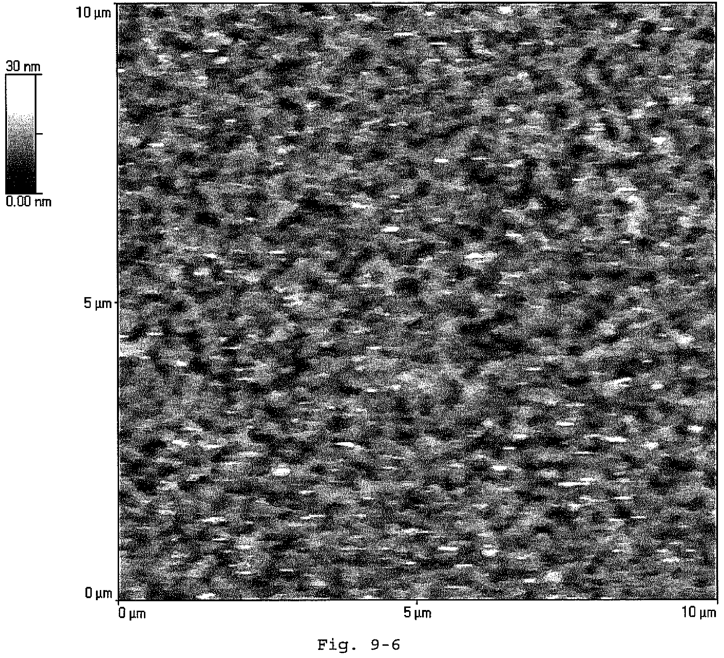

- Fig. 9-6: AFM-Messung der Beschichtung mit Zusammensetzung S2 auf Polykarbonat;

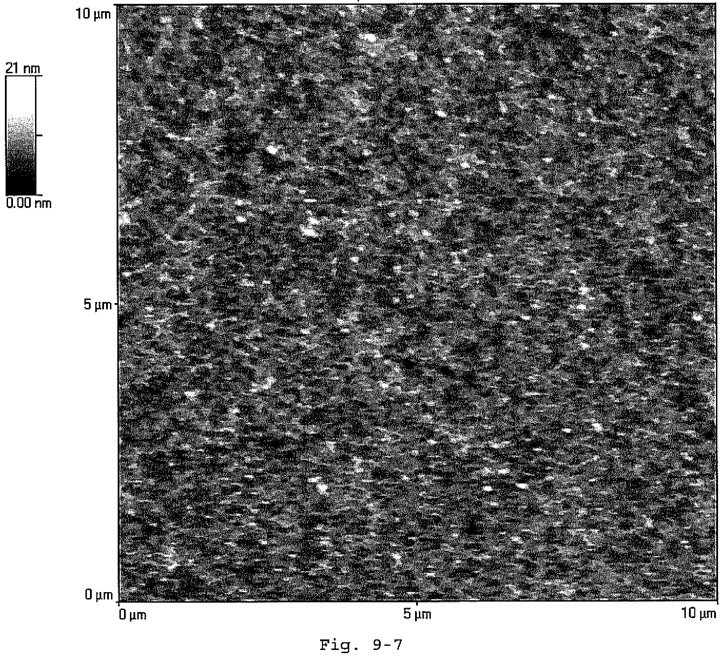

- Fig. 9-7: AFM-Messung der Beschichtung mit Zusammensetzung L auf Glas;

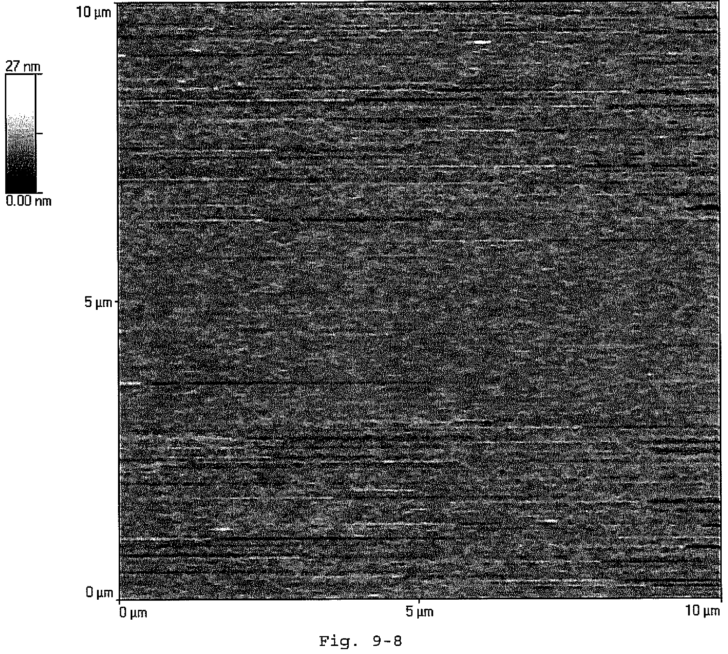

- Fig. 9-8: AFM-Messung der Beschichtung mit Zusammensetzung H auf Glas;

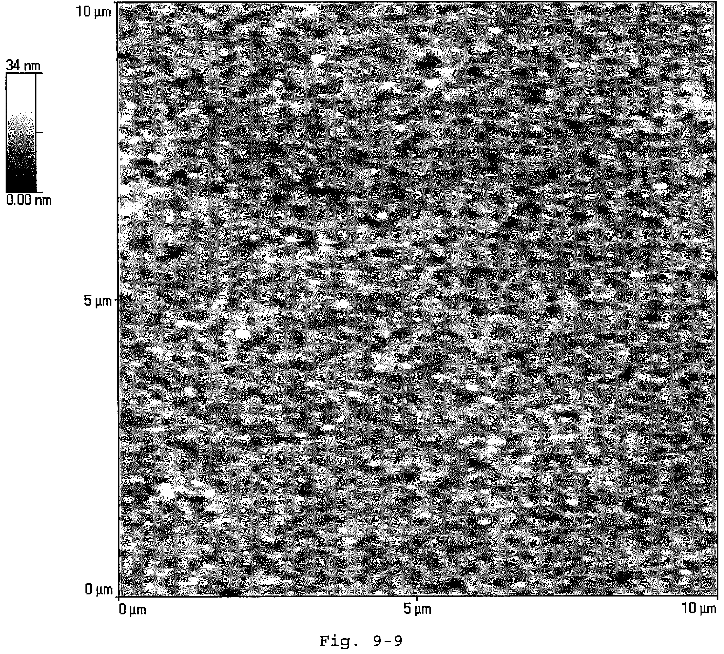

- Fig. 9-9: AFM-Messung der Beschichtung mit Zusammensetzung S2 auf Glas;

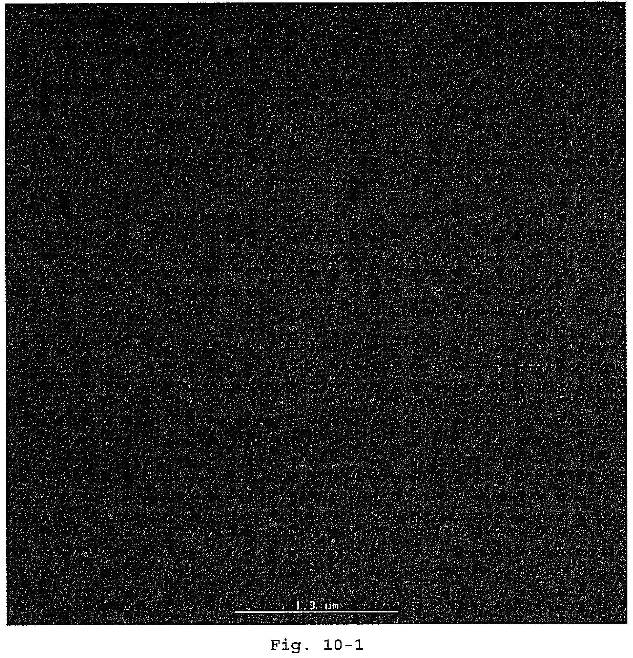

- Fig. 10-1: Mikroskopische Aufnahme (REM) einer Beschichtung mit Zusammensetzung S2 (20.000x, Maßstab 1.3 µm);

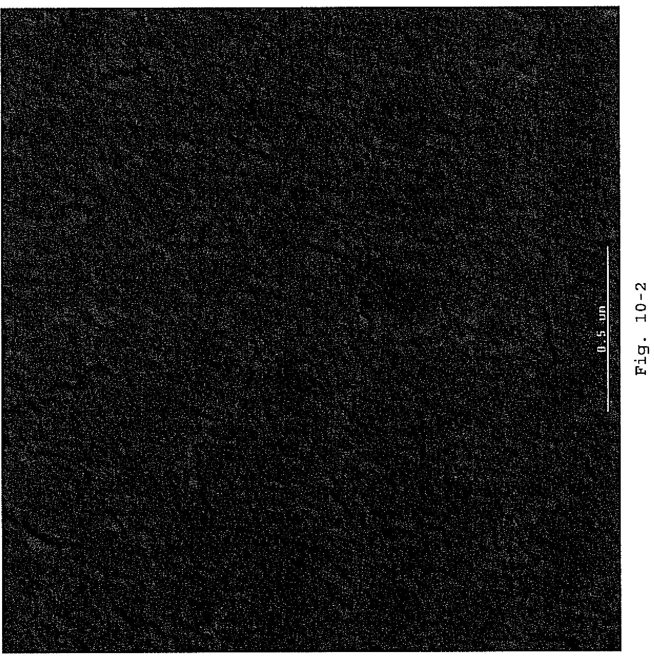

- Fig. 10-2: Mikroskopische Aufnahme (REM) einer Beschichtung mit Zusammensetzung S2 (50.000x, Maßstab 0.5 µm);

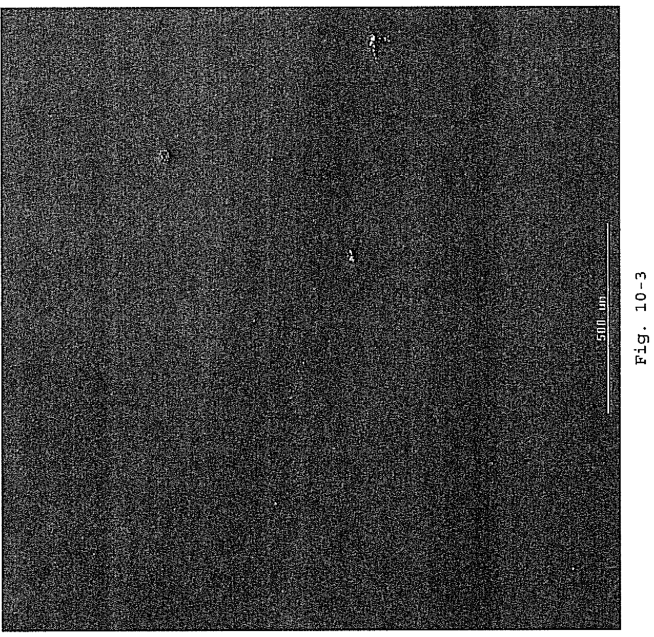

- Fig. 10-3: Mikroskopische Aufnahme (REM) einer Beschichtung mit Zusammensetzung S2 (60x, Maßstab 500 µm);

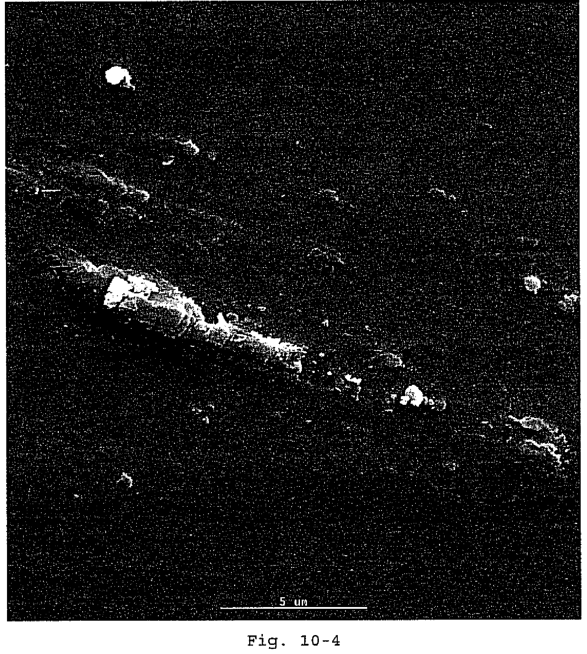

- Fig. 10-4: Mikroskopische Aufnahme (REM) einer Beschichtung mit Zusammensetzung S2 (5000x, Maßstab 5 µm);

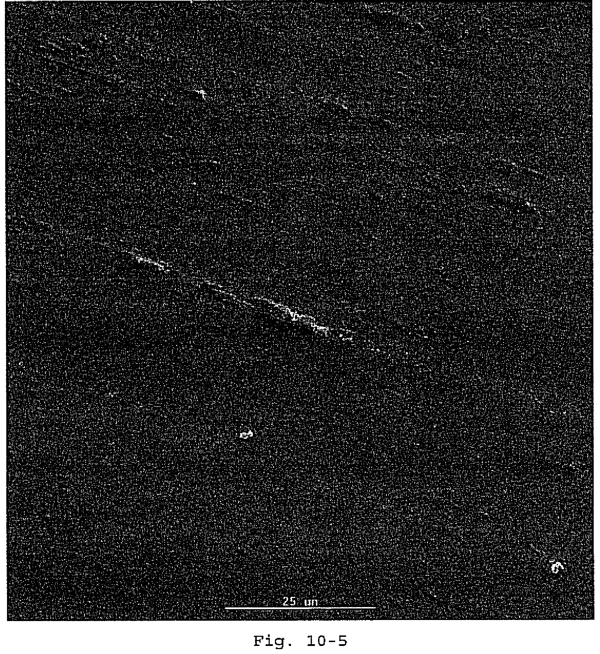

- Fig. 10-5: Mikroskopische Aufnahme (REM) einer Beschichtung mit Zusammensetzung S2 (1000x, Maßstab 25 µm);

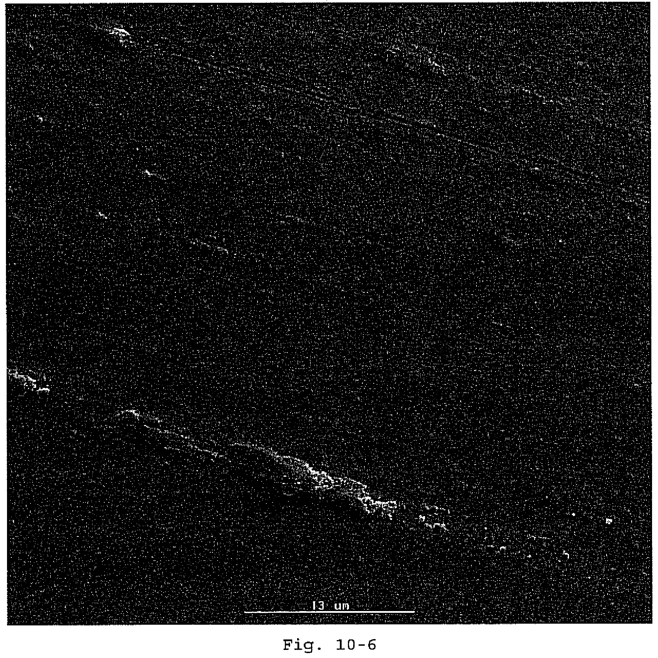

- Fig. 10-6: Mikroskopische Aufnahme (REM) einer Beschichtung mit Zusammensetzung S2 (2000x, Maßstab 13 µm);

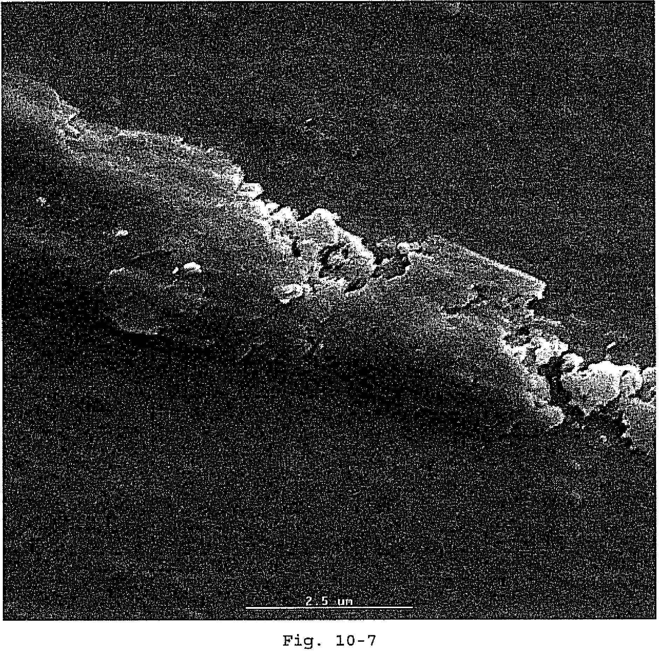

- Fig. 10-7: Mikroskopische Aufnahme (REM) einer Beschichtung mit Zusammensetzung S2 (10000x, Maßstab 2.5 µm);

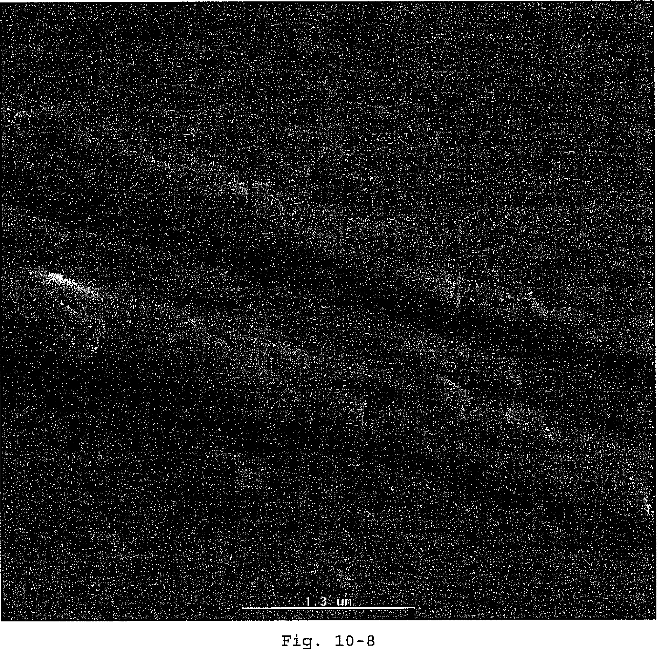

- Fig. 10-8: Mikroskopische Aufnahme (REM) einer Beschichtung mit Zusammensetzung S2 (20000x, Maßstab 1.3 µm);

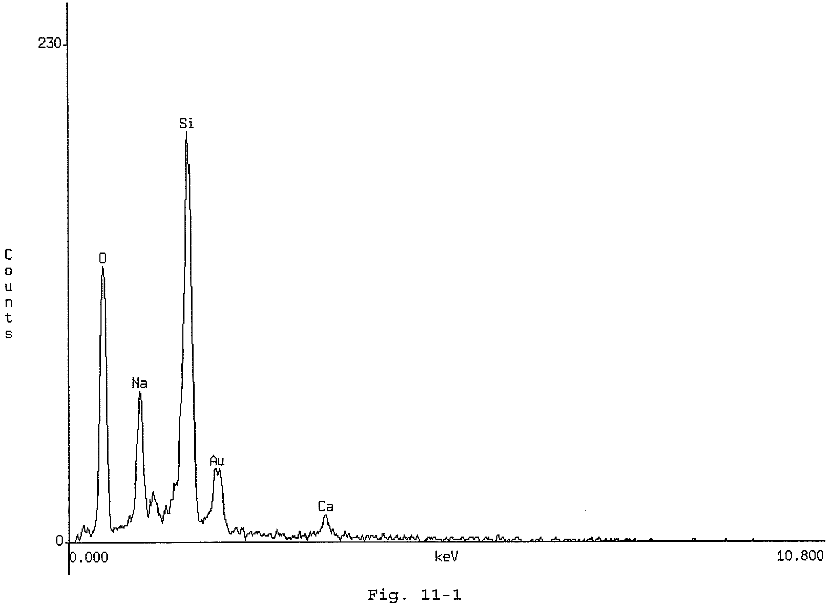

- Fig. 11-1: EDX-Messung einer Beschichtung mit Zusammensetzung S2;

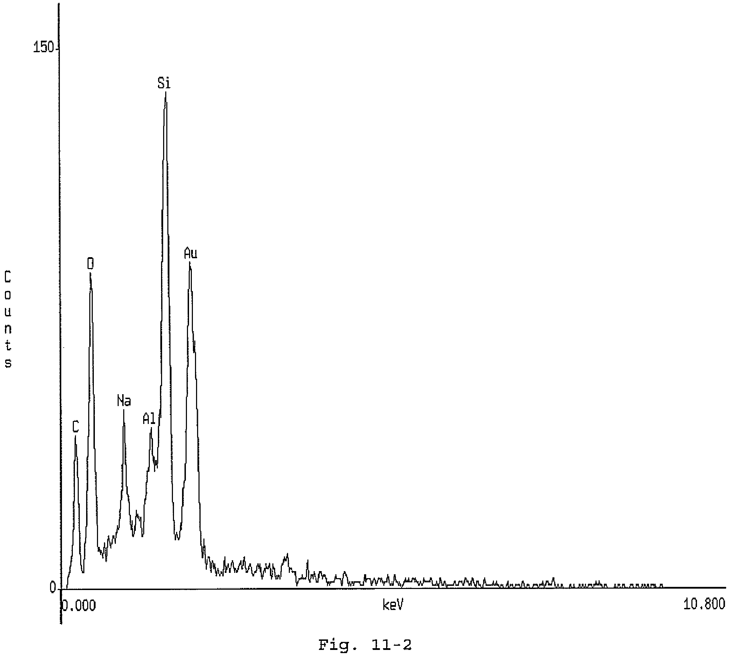

- Fig. 11-2: EDX-Messung einer Beschichtung mit Zusammensetzung S2 nach Zerkratzen der Stelle mit einem Bleistift;

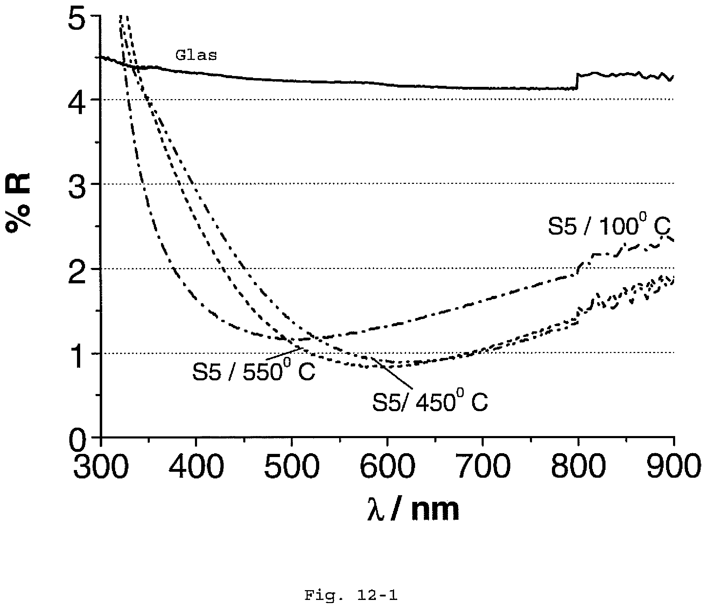

- Fig. 12-1: Reflexionsspektrum einer Beschichtung mit Zusammensetzung S5 auf Glas;

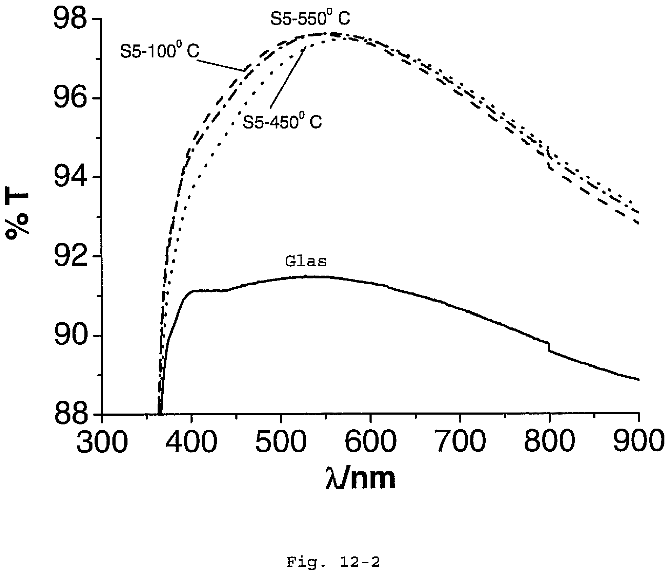

- Fig. 12-2: Transmissionsspektren einer Beschichtung mit Zusammensetzung S5 auf Glas;

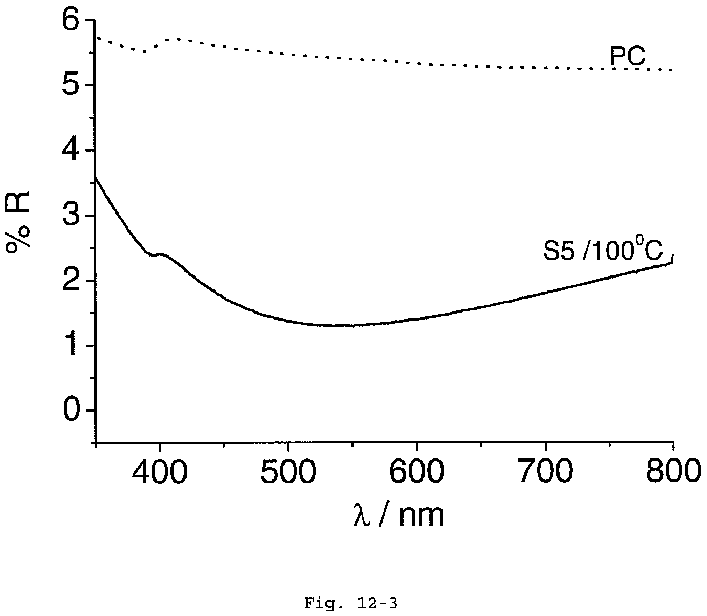

- Fig. 12-3: Reflexionsspektren einer Beschichtung mit Zusammensetzung S5 auf Polycarbonat;

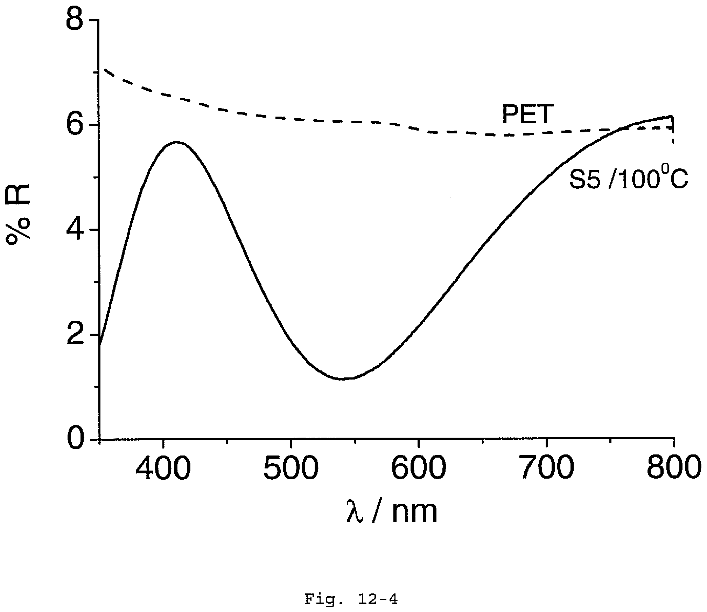

- Fig. 12-4: Reflexionsspektrum einer Beschichtung mit Zusammensetzung S5 auf Polyethylen (PE) hergestellt mit einem Roll-to-roll-Beschichtungsverfahren;

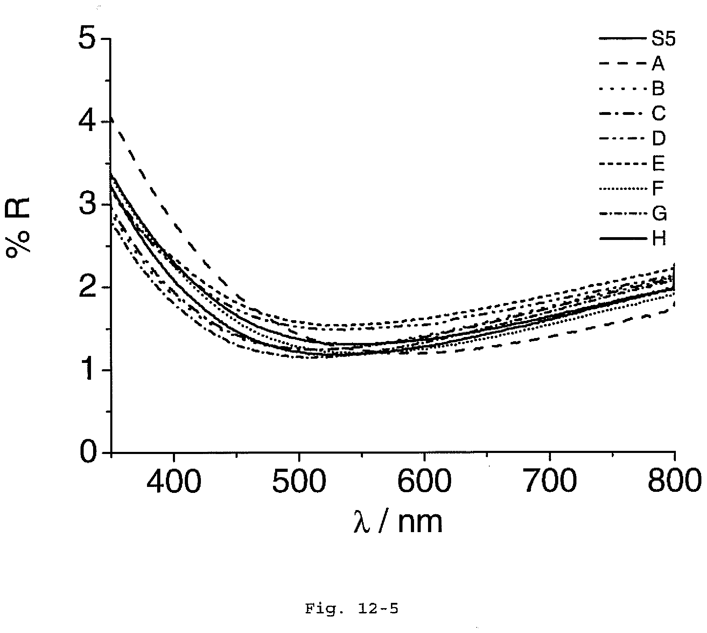

- Fig. 12-5: Reflexionsspektren von Beschichtungen von verschiedenen Abwandlungen der Zusammensetzung S5 auf Glas;

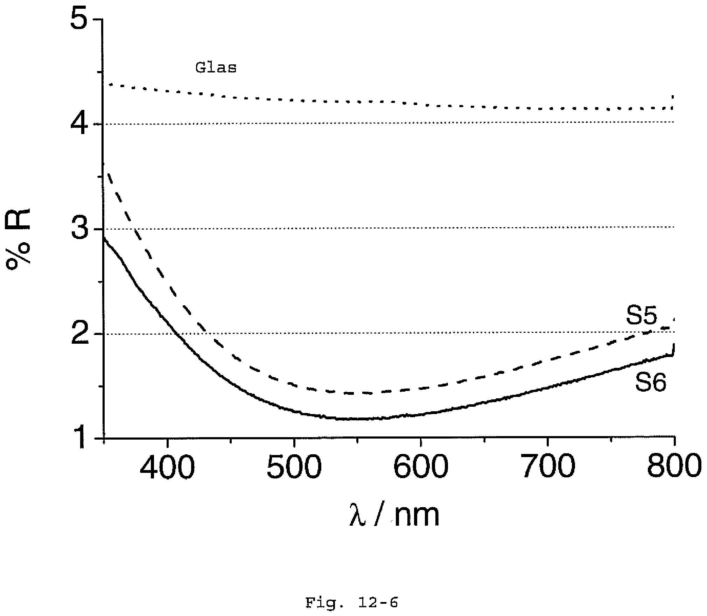

- Fig. 12-6: Reflexionsspektren von Beschichtungen mit der Zusammensetzung S5 und S6 auf Glas;

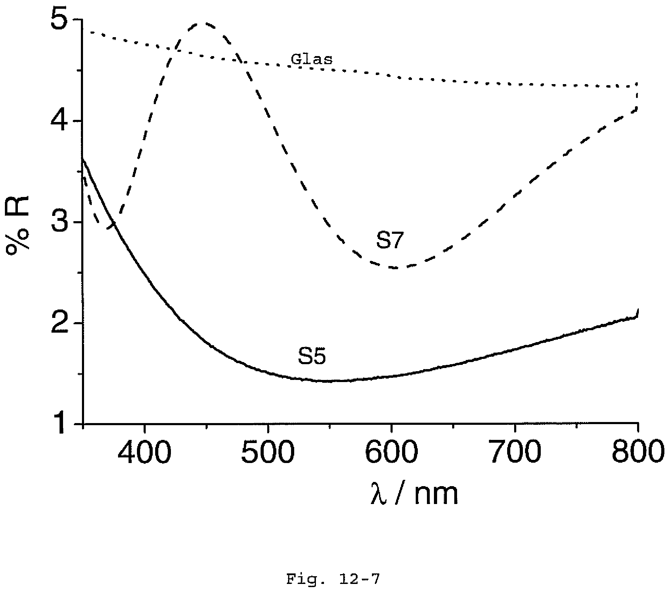

- Fig. 12-7: Reflexionsspektren von Beschichtungen mit den Zusammensetzungen S5 und S7 auf Glas;

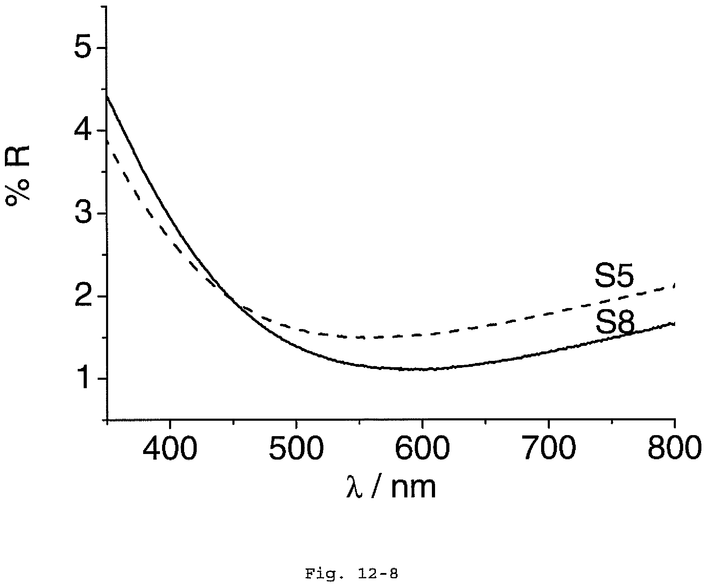

- Fig. 12-8: Reflexionsspektren von Beschichtungen mit den Zusammensetzungen S5 und S8 auf Glas;

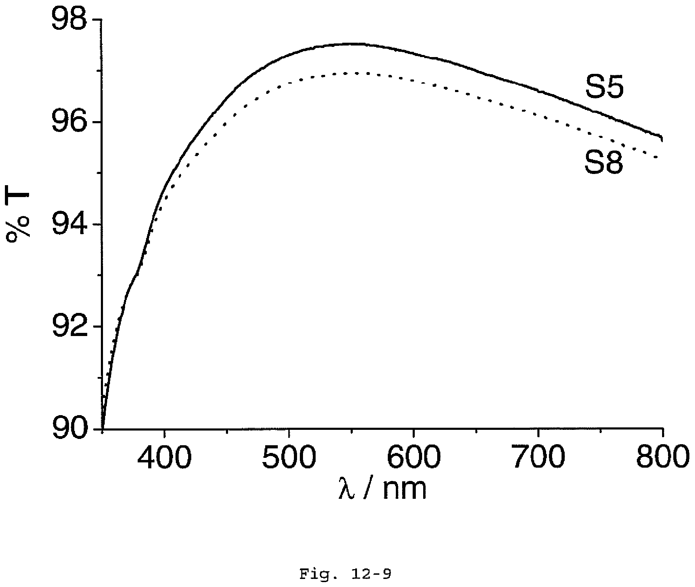

- Fig. 12-9: Transmissionsspektren von Beschichtungen mit den Zusammensetzungen S5 und S8 auf Glas;

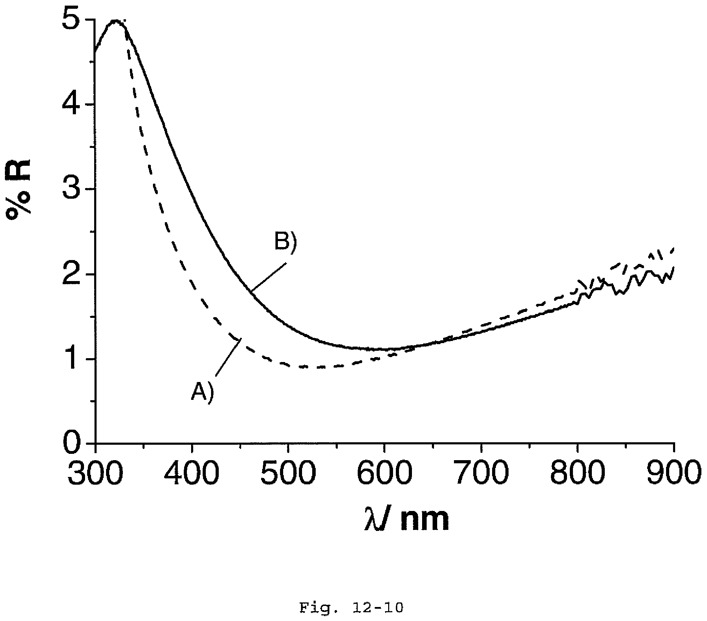

- Fig. 12-10: Reflexionsspektren eines einseitig (A) und eine beidseitig (B) mit S2 beschichteten Glassubstrats.

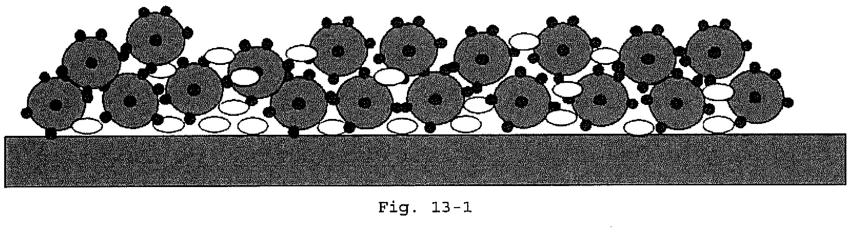

- Fig. 13-1: Schematische Darstellung der Beschichtung

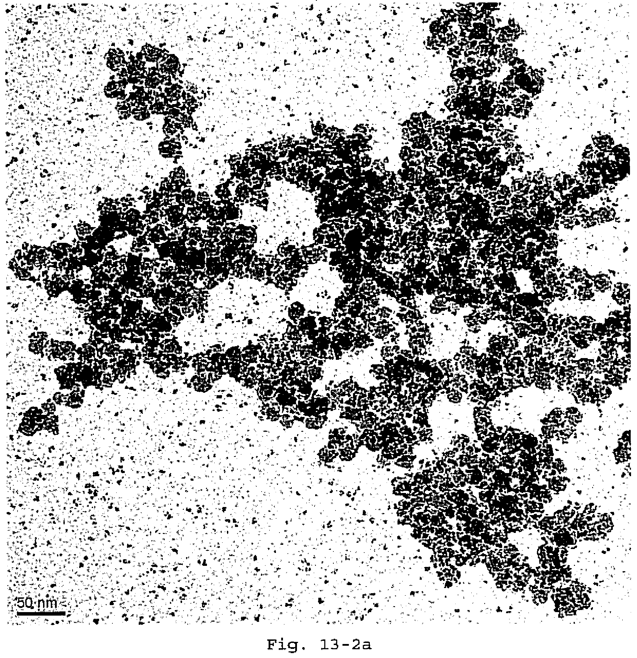

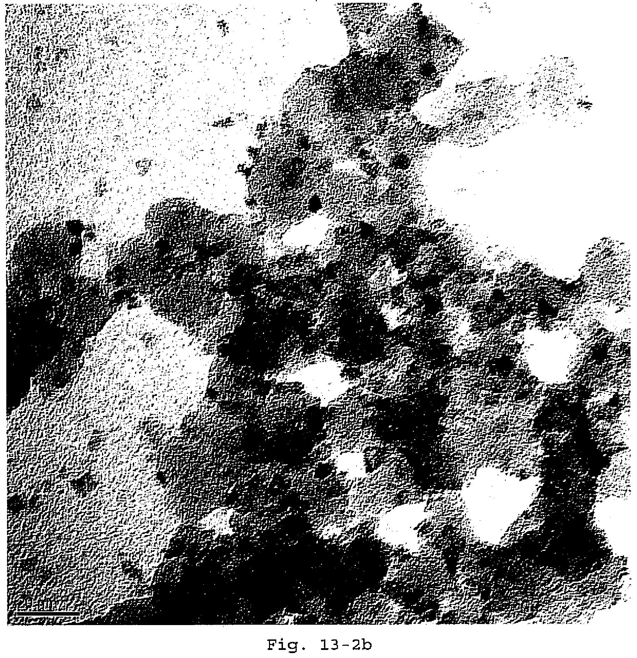

- Fig. 13-2a: TEM-Aufnahme eines Sols der Zusammensetzung (S1)
- Fig. 13-2b: HTEM-Detailaufnahme eines Sols der Zusammensetzung (S1)

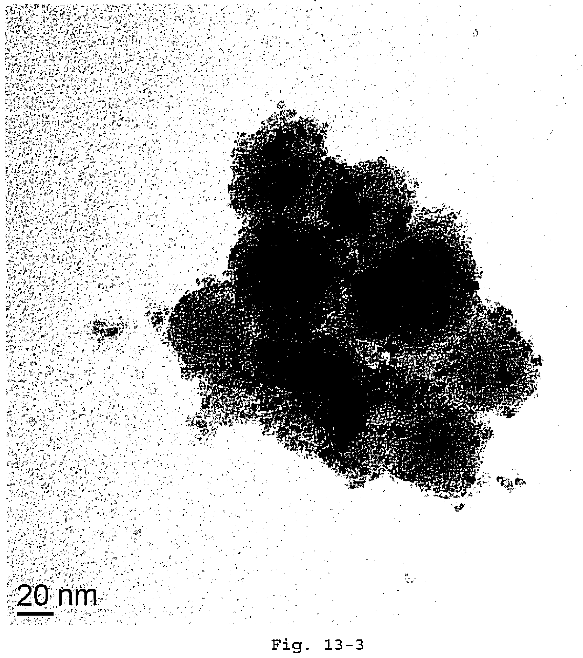

- Fig. 13-3: TEM-Aufnahme eines Sols der Zusammensetzung (S1)

Die Zusammensetzung zum Herstellen der Beschichtungen enthalten in einer bevorzugten Ausführungsform SiO₂-Nanopartikel mit einer weiteren Art von Nanopartikeln anderer Zusammensetzung, bevorzugt ITO oder TiO₂. Um die Porosität zu erhöhen, weisen beide Partikel nicht die gleiche mittlere Teilchengröße auf. Mit Vorteil sind die SiO₂-Nanopartikel 2-10 mal größer als die anderen Nanopartikel.

Eine mit einer Karbonsäure stabilisierte Suspension von SiO₂-Nanopartikeln mit einem Anteil von 20 Gew.-% bis 50 Gew.-% wird in mindestens einem Lösungsmittel dispergiert. Bei dem Lösungsmittel handelt es sich bevorzugt um Ethanol, Propanol, 2-Propanol oder um eine Mischung zweier dieser Alkohole im Verhältnis von 1:3 bis 3:1, bevorzugt 1:1 (nach Volumen).

Zu dieser Mischung wird eine Suspension der zweiten Art von Nanopartikeln mit einem Anteil von ca. 5 Gew.-% gegeben, welche in einem Alkohol oder einer Alkohol-Wasser Mischung im Verhältnis von 1:1 (Volumen) dispergiert sind.

Der Gesamtanteil an Nanopartikeln in der Zusammensetzung beträgt mind. 0.5 Gew.-%, bevorzugt zwischen 0.8 bis 5 Gew.-%, bevorzugt zwischen 2 und 4 Gew.-%. Das Verhältnis zwischen SiO₂ und der anderen Art an Nanopartikeln beträgt zwischen 10:1 und 5:1 in Gew.-%. Durch die andere Art von Nanopartikel kann auch die Absorption der Beschichtung beeinflusst werden, beispielsweise im IR-Bereich durch ITO-Partikel. Bei der anderen Art von Nanopartikeln handelt es sich bevorzugt um TiO₂ oder ITO.

In einer bevorzugten Ausführungsform werden die TiO₂-Partikel nach einer hydrothermalen Methode hergestellt. Dazu wird eine Titanalkoxid, bevorzugt Titanisopropoxid, zu einem Alkohol, bevorzugt Ethanol, n-Propanol, iso-Propanol, gegeben und unter sauren Bedingungen mit einer unterstöchiometrischen Menge an Wasser hydrolysiert. Mit Vorteil wird vor der Zugabe des Wassers ein Alkohol oder Polyalkohol, insbesondere Ethylenglykol, zugegeben. Die Hydrolyse erfolgt danach unter Erwärmung und Druck (hydrothermale Reaktion), z.B. durch Erwärmen im verschlossenen Behälter. Bevorzugt sind Temperaturen von über 100 °C, bevorzugt zwischen 150 °C und 300 °C. Die erhaltenen Partikel werden danach mit aprotischen Lösungsmitteln gewaschen und bei Temperaturen von unter 100 °C, bevorzugt zwischen 40 °C und 100 °C getrocknet. Die erhaltenen Pulver (Typ 2) zeichnen sich durch eine gute Dispergierbarkeit und besonders vorteilhafte Eigenschaften zur Herstellung der Antireflexbeschichtungen aus.

Die folgenden Zusammensetzungen wurden hergestellt (S4 ist nicht erfindungsgemäß):

| Zusammensetzung | Partikel 1 | Partikel 2 |
|---|---|---|
| S1 | SiO₂, 15 nm, säurestabilisiert | TiO₂, 5 nm, hergestellt nach Rückflussmethode (Typ 1) |
| S2 | SiO₂, 15 nm, säurestabilisiert | TiO₂, 5 nm, hergestellt nach hydrothermaler Methode (Typ 2) |
| S3 | SiO₂, 15 nm, säurestabilisiert | TiO₂, 3-4 nm, hergestellt nach hydrothermaler Methode (Typ 3) |
| H1 | TiO₂ wie S1 | |
| H2 | TiO₂ wie S2 | |
| H3 | TiO₂ wie S3 | - |
| L | SiO₂, 15 nm, säurestabilisiert | - |
| S4 | SiO₂, 15 nm, säurestabilisiert | ITO, hergestellt aus Nano-ITO c5000 S1N Paste |
| ITO | ITO, hergestellt aus Nano-ITO c5000 S1N Paste | - |
| S5 | SiO₂, 15 nm, säurestabilisiert | TiO₂, Typ2 |
| S6 | SiO₂, 30 nm, säurestabilisiert | TiO₂ wie S5 |
| S7 | SiO₂, 30 nm, basenstabilisiert | - |
| S8 | SiO₂ wie S5 | TiO₂ (Typ 2) |

Die Zusammensetzungen wurden auf unterschiedliche Substrate, wie Glas, Polykarbonat (PC), PMMA oder PET, aufgetragen.

Die beschichteten Substrate wurden danach einer Temperaturbehandlung unterzogen. Dabei wurde der Einfluss einer Behandlung bei niedriger Temperatur und einer Behandlung bei hoher Temperatur untersucht. Im Folgenden handelt es sich soweit nicht anders angegeben um bei niedriger Temperatur behandelte beschichtete Substrate.

Fig. 1-1 zeigt Reflexionsspektrum der Beschichtungen der Zusammensetzungen S1, S2, S3, H1, H2, H3 und L auf Polykarbonat(PC). Die Zusammensetzungen H1, H2 und H3 ergaben sehr ähnliche Spektren.

Fig. 1-2 zeigt Reflexionsspektrum der Beschichtungen der Zusammensetzungen S1, S2, S3, H1, H2, H3und L auf PMMA. Die Zusammensetzungen H1, H2 und H3 ergaben sehr ähnliche Spektren.

Fig. 1-3 zeigt Reflexionsspektrum der Beschichtungen der Zusammensetzungen S1, S2, S3, H1, H2, H3 und L auf Glas. Die Zusammensetzungen H1, H2 und H3 ergaben sehr ähnliche Spektren.

Bei allen Messungen ist deutlich zu erkennen, dass die Beschichtung hergestellt mit Zusammensetzung S2 besonders vorteilhafte Eigenschaften aufweist.

Die Figuren 2-1 bis 2-3 zeigen die Transmissionseigenschaften der gleichen Proben.

Die Figuren 3-1a und 3-1b zeigen das Reflexionsspektrum der Beschichtung der nicht erfindungsgemäßen Zusammensetzung S4 im Bereich des sichtbaren Lichts und im Infrarotbereich (IR-Region) auf Polykarbonat im Vergleich mit dem unbeschichtetem Substrat (Polykarbonat: PC), der Beschichtung mit der Zusammensetzung L und einer Beschichtung nur aus der Zusammensetzung ITO. Die Figuren 3-2a,b und 3-3a,b zeigen die gleichen Messungen für Beschichtungen auf PMMA und Glas.

Die Figuren 4-1a,b, 4-2a,b und 4-3a,b zeigen die entsprechenden Transmissionsspektren der Proben aus 3-1a,b, 3-2a,b und 3-3a,b.

Die Beschichtungen besitzen außerdem eine hohe Porosität. Dies konnte durch Ellipsometrie bestätigt werden. Die Proben weisen auch einen sehr geringen Kontaktwinkel zu Wasser, insbesondere von unter 40° auf Glas.
Die Rauheit der Oberflächen wurde auch durch AFM-Messungen bestätigt. So wurde mit Hilfe von AFM-Messungen wurden die mittlere Rauheit (Rₐ) und die Quadratische Rauheit (R_{RMS}) von verschiedenen Beschichtungen (hergestellt mit Niedrigtemperaturmethode) bestimmt. Die Rauheit der Beschichtung mit S2 ist in fast allen Fällen deutlich höher als die Rauheit der entsprechenden Beschichtungen aus den Zusammensetzungen H-2 und L. Zwar ist die Rauheit der Beschichtung mit der Zusammensetzung L auf Polykarbonat höher, aber das AFM-Bild (Fig. 9-4) zeigt eine inhomogene

Beschichtung und die Beschichtung ist außerdem leicht ablösbar. Bei allen anderen Beschichtungen ist eine homogene Oberfläche zu erkenne. Die Poren sind gleichmäßig verteilt.

| Zusammensetzung | Substrat | Figur | Rₐ | R_{RMS} |
|---|---|---|---|---|
| L | PMMA | 9-1 | 2.2272 | 3.1044 |
| H2 | PMMA | 9-2 | 0.6473 | 0.8989 |
| S2 | PMMA | 9-3 | 2.5585 | 3.3252 |
| L | PC | 9-4 | 8.3599 | 10.4023 |
| H2 | PC | 9-5 | 0.9590 | 1.2367 |
| S2 | PC | 9-6 | 2.1416 | 2.7637 |
| L | Glas | 9-7 | 1.3493 | 1.7218 |
| H2 | Glas | 9-8 | 0.9537 | 1.2872 |
| S2 | Glas | 9-9 | 2.4477 | 3.1326 |

Die Eigenschaften der Beschichtungen können durch die Behandlung bei hoher Temperatur nochmals verbessert werden. Wahrscheinlich können die einzelnen Nanopartikel der Beschichtung bei dieser Temperatur noch vorteilhaftere Poren bilden.

So weisen die Beschichtungen mit S1, S2 oder S3 eine photokatalytische Aktivität auf, welche zur Zersetzung von organischen Substanzen auf der Oberfläche führt. Dies wird auch als selbstreinigende Eigenschaft (*self-cleaning property*) bezeichnet. Fig. 7-1 zeigt die Messung der photokatalytischen Aktivität von mit hoher Temperatur behandelten Beschichtungen auf Glas. Alle Beschichtungen weisen eine ähnliche Aktivität auf, obwohl die Beschichtungen mit S1, S2 und S3 im Verhältnis zu der Beschichtung aus reinem TiO₂ (H) einen deutlich geringeren Gehalt an TiO₂ aufweisen.

Gleichzeitig sind diese Beschichtungen, wahrscheinlich aufgrund ihrer besonderen Porosität, auch superhydrophil (Kontaktwinkel von 0 °). Dabei verlieren die Beschichtungen mit der Zusammensetzung S2 und S3 diese Eigenschaft auch nicht nach mehrmaligem Benetzen oder nach längerer Lagerung (mehrere Monate). Die Beschichtungen aus der Zusammensetzung H2 verlieren diese Eigenschaft mit der Zeit.

Superhydrophilie führt auch zu Antibeschlageigenschaften der Beschichtungen. So zeigen Beschichtungen aus den Zusammensetzungen S1, S2 oder S3 (behandelt mit Hochtemperaturverfahren) eindeutig eine Antibeschlag-Eigenschaft auf (Fig. 8-1 a-d).

In einer weiteren bevorzugten Ausführungsform wird zur Herstellung der Zusammensetzung ein Gemisch aus zwei Alkoholen verwendet, bevorzugt aus Ethanol und 2-Propanol, SiO₂-Nanopartikel und TiO₂-Nanopartikel, bevorzugt TiO₂-Nanopartikel von Typ 2, verwendet (Zusammensetzung S5).

Figur 12-1 zeigt die Reflexionsspektren von Beschichtungen mit der Zusammensetzung S5 auf Glas bei unterschiedlicher Temperaturbehandlung. Es zeigt sich, dass auch bei Behandlung bei niedriger Temperatur sehr gute Eigenschaften erhalten werden. Gleiches gilt auch für die Transmissionseigschaften (Fig. 12-2). Auch dort wird schon bei niedrigen Temperaturen eine eindeutig vergleichbare Transmission erzielt.

Gleiches gilt auch für die Beschichtung auf Kunststoffen, wie Polykarbonat (Fig. 12-3), wo eine durchschnittliche Reflexion von nur 1.68 % für den Bereich von 400-780 nm erreicht wird. Auch auf PET zeigt eine solche Beschichtung sehr gute Eigenschaften (Fig. 12-4)

Dabei ist die Zusammensetzung recht unempfindlich gegen leichte Veränderung ihrer Bestandteile. So wurde die Beschichtung S5 wie folgt modifiziert und die jeweiligen Reflexionsspektren gemessen (Fig. 12-5):

| | | Reflexionsspektrum Durschnitt 380 - 780 nm |
|---|---|---|
| S5A | 5% mehr SiO₂ als S5 | 1.54 |
| S5B | 5% weniger SiO₂ als S5 | 1.54 |
| S5C | 5 % mehr Ethanol als S5 | 1.54 |
| S5D | 5% weniger Ethanol als S5 | 1.72 |
| S5E | 5% mehr 2-Propanol als S5 | 1.79 |
| S5F | 5% weniger 2-Propanol als S5 | 1.49 |
| S5G | 5% mehr TiO₂ als S5 | 1.48 |
| S5H | 5% weniger TiO₂ als S5 | 1.46 |
| S5 | - | 1.58 |

Nur die Verringerung von Ethanol oder eine Erhöhung des Gehalts an 2-Propanol führte zu geringfügig schlechteren Eigenschaften.

Zusätzlich wurde der Einfluss des Größenunterschieds der Nanopartikel untersucht. So wurde die Zusammensetzung S6 mit doppelt so großen SiO₂-Nanopartikeln hergestellt. Figur 12-6 zeigt die Reflexionsspektren auf Glas. Erneut ist eine leichte Verbesserung der Eigenschaften festzustellen. Wahrscheinlich führen die größeren SiO₂-Partikel zu der Ausbildung von größeren Hohlräumen und Nanoporen.

Der Einfluss der Stabilisierung der SiO₂-Partikel wurde in der Zusammensetzung S7 untersucht. Diese Zusammensetzung wurde analog zu Zusammensetzung S6 hergestellt, aber mit ammoniakstabilisierten SiO₂-Nanopartikel. Das Reflexionsspektrum (Fig. 12-7) zeigt deutlich schlechtere Eigenschaften. Wahrscheinlich unterschützt die Säure der Zusammensetzung die Bildung von Nanoporen und Hohlräumen während der Temperaturbehandlung.

Um den Einfluss der TiO₂-Nanopartikel zu untersuchen, wurde die Zusammensetzung S8 mit lyothermisch hergestellten TiO₂-Nanopartikeln hergestellt. Figur 12-8 zeigt die gemessenen Reflexionsspektren. Dabei wurde für S5 ein Durchschnittswert von 1.47 % (400-800 nm) und für S8 ein Durchschnittswert von 1.77 % (400-800 nm) gemessen. Auch in der Transmission (Fig. 12-9) ist die Beschichtung mit der Zusammensetzung S5 der Beschichtung mit der Zusammensetzung S8 überlegen.

In Figur 12-10 sind Reflexionsspektren von einseitig (A) und zweiseitig (B) beschichteten Glassubstraten dargestellt (S2-450 °C) Es ist deutlich zu erkennen, dass die einseitige Beschichtung deutlich bessere Ergebnis zeigt. Zusätzlich wurde die Trübung (Haze) der Beschichtungen untersucht und sehr geringe Werte (0.06-0.1) gemessen.

Ein wichtiger Effekt der Erfindung scheint in den Wechselwirkungen zwischen den verschiedenen Nanopartikeln in der Zusammensetzung zu liegen. Figur 13-1 zeigt eine schematische Darstellung einer Beschichtung. Dabei zeigen die großen Kreise die SiO₂-Partikel, welche homogen durch die kleineren TiO₂-Partikel (kleine Kreist) belegt sind. Die elliptischen Elemente zeigen Hohlräume und Nanoporen (Dies sind Poren, welche in der Größenordnung von Nanometern, d.h. zwischen 1 bis 1000 nm liegen, bevorzugt zwischen 50 und 800 nm).

Diese Wechselwirkung bildet sich bereits in der erfindungsgemäßen Zusammensetzung aus. So zeigen die Figuren 13-2a,b und 13-3 TEM-Aufnahmen einer Zusammensetzung. Dabei sind deutlich die großen SiO₂-Partikel mit einem Durchmesser von ca. 30 nm zu erkennen, die mit den ca. 2-6 nm großen TiO₂-Partikeln homogen belegt sind.

### Herstellung der Zusammensetzungen

### Zusammensetzung S1

3 ml kommerziell erhältliche Nanopartikel (Levasil 200S 30%, 15nm, mit Essigsäure stabilisiert) wurden in 24 ml Ethanol dispergiert und 5 Minuten vermischt. Danach wurden 3 ml TiO₂-Suspension (Typ 1; reflux methode, 5 nm, 5 Gew.-% TiO₂ dispergiert in Ethanol:Wasser 1:1 nach Volumen) zugegeben und 2 Stunden gerührt. Die Zusammensetzung hat ein SiO2:TiO2-Verhältnis von 6:1. Die wurde auch durch Energiedispersive Röntgenspektroskopie (EDX) bestätigt (Fig. 5-1). Analyse mit Transmissionselektronenmikroskopie zeigt, dass die Partikel gut dispergiert vorliegen (Fig. 6-1).

### Zusammensetzung S2

Gleiche Herstellung wie Zusammensetzung S1, aber mit einer TiO₂-Suspension mit TiO₂-Partikeln Typ 2 (5 nm, siehe spätere Beschreibung). Analyse mit Transmissionselektronenmikroskopie zeigt, dass die Partikel sehr gut dispergiert vorliegen (Fig. 6-2).

### Zusammensetzung S3

Gleiche Herstellung wie Zusammensetzung S1, aber mit einer TiO₂-Suspension mit TiO₂-Partikeln Typ 3 (3-4 nm) hergestellt mit dem Lyothermalverfahren Analyse mit Transmissionselektronenmikroskopie zeigt, dass die Partikel sehr gut dispergiert vorliegen (Fig. 6-3).

### Zusammensetzung H1, H2, H3 (TiO₂-Sole)

Für TiO₂-Sole mit 3 Gew.-% wurden 18 ml der TiO₂-Suspensionen Typ 1, 2 oder 3 in 12 ml Ethanol dispergiert und 2 Stunden gerührt. Dabei besteht H1 aus Typ 1, H2 aus Typ 2 und H3 aus Typ 3.

### Zusammensetzung L

Für ein 3 Gew.-% SiO₂-Sol wurden aus 3 ml SiO₂-Suspension (Levasil 200S, 30%, 15 nm, mit Essigsäure stabilisiert) in einer Mischung aus 24 ml Ethanol und 3 ml Wasser dispergiert und für 2 Stunden vermischt.

### Zusammensetzung S4 (nicht erfindungsgemäß)

3 ml von kommerziell erhältlichen SiO₂ Nanopartikeln (Levasil 200S, 30%, 15nm, mit Essigsäure stabilisiert) wurden in 24 ml Ethanol dispergiert und für 5 Minuten vermischt. Dazu wurde 3 ml einer Suspension von ITO-Nanopartikeln (5 Gew.-% dispergiert in Ethanol, hergestellt von Nano-ITO c5000 S1N Paste (71%)) gegeben und die Mischung für 2 Stunden gerührt. Analyse mit Transmissionselektronenmikroskopie zeigt, dass die ITO-Partikel teilweise als Agglomerate vorliegen (Fig. 6-4a,b).

### Zusammensetzung ITO

Für ein 3 Gew.-% ITO-Sol wurden 18 ml einer Suspension von ITO-Nanopartikeln (5 Gew.-% dispergiert in Ethanol, hergestellt von Nano-ITO c5000 S1N Paste (71%)) in 12 ml Ethanol dispergiert und für 2 Stunden gerührt.

### Herstellung der TiO₂-Nanopartikel (Typ 2)

72.08 g Titanisopropoxid wurde langsam zu 50 ml n-Propanol gegeben und für 5 Minuten vermischt. Dann wurden wurde zu der Mischung 11.9 g)konzentrierter HCl (37%) gegeben und für 5 Minuten vermischt. Im nächsten Schritt wurden 27.93g Ethylenglykol langsam zugegeben und für 20 Minuten vermischt. Nach gründlicher Durchmischung wurde die Mischung in einem Teflon-Behälter überführt und 2.36g Wasser zugetropft und für einer weitere Stunde gerührt. Danach wurde die Mischung für 3h bei 200°C in einem Autoklaven erhitzt. Die erhaltenen TiO₂-Partikel wurden einmal mit Aceton (200ml) und einmal mit 1-Butanal (150 ml) oder 2-Butanon (150 ml) gewaschen und durch Zentrifugation abgetrennt. Die Partikel wurden in einem Vakuumofen bei 60 °C getrocknet.

### Beschichtung der Substrate

Die hergestellten Zusammensetzungen wurden mit einer Dipcoat-Maschine mit einer Geschwindigkeit von 2mm/sec.

Es wurden folgende Substrate verwendet:
Glas (7.5 x 2.5 (l x b) Dicke 1 mm)
Polycarbonat (7.5 x 2.5 (l x b) Dicke 4 mm)
PMMA (7.5 x 2.5 (l x b) Dicke 3 mm)

Nach der Beschichtung wurden die Beschichtungen unterschiedlich behandelt.

### Behandlung bei niedriger Temperatur:

Beschichtungen auf PMMA wurden für eine Stunde bei 80 °C behandelt. Beschichtungen auf Polycarbonat und Glas wurden für eine Stunde bei 100 °C behandelt.

### Behandlung bei hoher Temperatur:

Die Beschichtungen auf Glas wurden für 30 Minuten bei 450 °C behandelt bei einer Aufheizrate von 5°C/Min.

### Messung der Transmission und Reflexion

Die Reflexions- und Transmissionsspektren wurden mit einem Cary 5000 Messgerät aufgenommen.

### Photokatalytische Aktivität

Die Versuche wurden mit Beschichtungen aus den Zusammensetzungen S1, S2, S3 und H, wobei alle H-Sole ähnliche Ergebnisse ergaben, auf Glas durchgeführt, welche für 30 Minuten bei 450 °C (Heizrate 5°C/Min.) behandelt worden waren. Für die Photodegradationsexperimente wurde der Abbau von 4-Chorphenol (4-CP) als Modellsubstanz untersucht. Zu der jeweiligen beschichteten Glasplatte wurden 50 mL einer Lösung mit einer Konzentration von 4-CP von c₀ = 50 µmol/L gegeben und durch künstliches Sonnenlicht unter Verwendung eines Atlas Suntester CPS+ mit einer 750 W Xenon-Lampe bestrahlt. Die jeweilige Konzentration cₜ des 4-CPs wurde durch UV-Vis-Spektroskopie bestimmt. In Fig. 7-1 sind die auf die jeweilige Ausgangskonzentration C₀ normalisierten Konzentrationen des 4-CP gegen die Bestrahlungsdauer aufgetragen.

### Messung der Porosität

Die Porosität der Beschichtungen wurde mit Hilfe von Ellipsometrie untersucht. Dabei wurden die Beschichtungen auf Glas bei 450 °C, auf PMMA und PET bei 80 °C und PC bei 100 °C behandelt. Es wurden folgende Brechungsindices bestimmt:

| Beschichtung aus Zusammensetzung: | Glass | PC | PMMA | PET |
|---|---|---|---|---|
| L - SiO₂ | 1.4001 | 1.5 | 1.3878 | |
| H - TiO₂ -1 | 1.8009 | 1.8102 | 1.835 | |
| S1 | 1.4436 | 1.341 | 1.4045 | |
| H - TiO₂ -2 | 1.9028 | 1.8885 | 1.8833 | |
| S2 | 1.3747 | 1.3408 | 1.2511 | 1.403 |
| H - TiO₂ -3 | 2.0488 | 2.0472 | 2.0241 | |
| S3 | 1.4287 | 1.3866 | 1.3524 | |

Der Brechungsindex aller Beschichtungen S1, S2 und S3 mit SiO₂ und TiO₂ ist geringer als der Brechungsindex der Beschichtungen L (SiO₂, 1.4-1.5) und H (TiO₂, Anatas, 2.0-2.7). Dies deutet darauf hin, dass diese Beschichtungen eine höhere Porosität, z.B. durch die Bildung von Nanoporen aufweisen. Dabei zeigt S2 einen besonders niedrigen Brechungsindex.

### Messung des Kontaktwinkels der Beschichtungen

Zusätzlich zum Brechungsindex lässt auch der Kontaktwinkel einer Oberfläche Rückschlüsse über die Porosität einer Oberfläche zu. Dabei zeigt ein geringer Kontaktwinkel eine hohe Rauheit der Oberfläche und damit auch eine hohe Porosität an. Die Messung wurde unter einem Mikroskop bei Raumtemperatur durchgeführt. Der Kontaktwinkel gegen Wasser wurde an drei Positionen der Beschichtung bestimmt und der Mittelwert gebildet.

| Material | Zusammensetzung der Beschichtung (Niedrigtemperaturbehandlung) | | | | | | |
|---|---|---|---|---|---|---|---|
| PC | L | H-1 | H-2 | H-3 | S1 | S2 | S3 |
| Θ [°] | 69 | 51 | 62 | 64 | 50 | 45 | 50 |
| PMMA | | | | | | | |
| Θ [°] | 43 | 82 | 64 | 67 | 52 | 30 | 35 |
| Glas | | | | | | | |
| Θ [°] | 50 | 70 | 66 | 72 | 48 | 31 | 39 |

Die Beschichtungen S1, S2, S3 zeigen ebenfalls geringe Kontaktwinkel, was auf eine Porosität der Beschichtungen hindeutet.

Auch der Kontaktwinkel von Beschichtungen auf Glas mit Hochtemperaturbehandlung (450 °C, 30 Min.) wurde untersucht:

| | | | | |
|---|---|---|---|---|
| | H2 | H2 | S2 | S3 |
| Frische Probe | 0 | 0 | 0 | 0 |
| Bei neuer Benetzung zum | | | | |
| ersten mal | 20 | 21 | 0 | 0 |
| Zweiten mal | 32 | 30 | 0 | 0 |

### Antibeschlag-Eigenschaften

Dazu wurden Beschichtungen aus den Zusammensetzungen S1, S2, S3 (behandelt mit Hochtemperaturverfahren) auf unter 5°C gekühlt und einer Atmosphäre mit relativer Luftfeuchtigkeit (50-55%) ausgesetzt. Alle Beschichtungen wiesen eindeutig eine Antibeschlag-Eigenschaft auf (Fig. 8-1 a-d).

### Messung der Stabilität / Härte der Beschichtung

Zur Messung der (mechanischen) Stabilität der Beschichtung wurde eine Beschichtung aus der Zusammensetzung S2 (Temperaturbehandlung 450 °C, 30 Minuten, auf Glassubstrat) mit einem Bleistift der Härte 5H angekratzt und mit einem SEM-Mikroskop und EDX untersucht. Die Mikroskopischen Aufnahmen zeigen eine homogene Oberfläche. Durch das Kratzen mit dem Bleistift wurde die Oberfläche nur leicht angekratzt. Die EDX-Messung der unbeschädigten Oberfläche zeigt im Wesentlichen die Signale von Si und O. Nach dem Ankratzen kommen die Signale von C und Al hinzu, welche allerdings vom Bleistift herrühren.

### Herstellung der Zubereitung S5

3.27 g (3 ml) eines SiO₂-Sols (Levasil 200S, 30%, 15nm, säurestabilisiert) wurden in 50 : 50 Ethanol und 2-propanol (11.85 (15ml)+11.70g (15ml) ) dispergiert und für 5 Minuten gemischt. Danach wurden 1.8 ml einer Suspension von TiO₂-Nanopartikeln (5 Gew.-% (90 mg) dispergiert in einer Mischung aus 1 g Wasser und 0.78 g Ethanol) zugegeben und die Zusammensetzung für 2 Stunden gerührt.

### Herstellung der Zubereitung S5A

3.4335 g eines SiO₂-Sols (Levasil 200S, 30%, 15nm, säurestabilisiert) wurden in 50 : 50 Ethanol und 2-propanol (11.85 (15ml)+11.70g (15ml)) dispergiert und für 5 Minuten gemischt. Danach wurden 1.8 ml einer Suspension von TiO₂-Nanopartikeln (5 Gew.-% (90 mg) dispergiert in einer Mischung aus 1 g Wasser und 0.78 g Ethanol) zugegeben und die Zusammensetzung für 2 Stunden gerührt.

### Herstellung der Zubereitung S5B

3.1065 g eines SiO₂-Sols (Levasil 200S, 30%, 15nm, säurestabilisiert) wurden in 50 : 50 Ethanol und 2-propanol (11.85 (15ml)+11.70g (15ml)) dispergiert und für 5 Minuten gemischt. Danach wurden 1.8 ml einer Suspension von TiO₂-Nanopartikeln (5 Gew.-% (90 mg) dispergiert in einer Mischung aus 1 g Wasser und 0.78 g Ethanol) zugegeben und die Zusammensetzung für 2 Stunden gerührt.

### Herstellung der Zubereitung S5C

3.27 g eines SiO₂-Sols (Levasil 200S, 30%, 15nm, säurestabilisiert) wurden in einer Mischung aus Ethanol (12.433) und 2-propanol (11.70g) dispergiert und für 5 Minuten gemischt. Danach wurden 1.8 ml einer Suspension von TiO₂-Nanopartikeln (5 Gew.-% (90 mg) dispergiert in einer Mischung aus 1 g Wasser und 0.78 g Ethanol) zugegeben und die Zusammensetzung für 2 Stunden gerührt.

### Herstellung der Zubereitung S5D

3.27 g eines SiO₂-Sols (Levasil 200S, 30%, 15nm, säurestabilisiert) wurden in einer Mischung aus Ethanol (11.258) und 2-propanol (11.70g) dispergiert und für 5 Minuten gemischt. Danach wurden 1.8 ml einer Suspension von TiO₂-Nanopartikeln (5 Gew.-% (90 mg) dispergiert in einer Mischung aus 1 g Wasser und 0.78 g Ethanol) zugegeben und die Zusammensetzung für 2 Stunden gerührt.

### Herstellung der Zubereitung S5E

3.27 g eines SiO₂-Sols (Levasil 200S, 30%, 15nm, säurestabilisiert) wurden in einer Mischung aus Ethanol (11.85) und 2-propanol (12.285g) dispergiert und für 5 Minuten gemischt. Danach wurden 1.8 ml einer Suspension von TiO₂-Nanopartikeln (5 Gew.-% (90 mg) dispergiert in einer Mischung aus 1 g Wasser und 0.78 g Ethanol) zugegeben und die Zusammensetzung für 2 Stunden gerührt.

### Herstellung der Zubereitung S5F

3.27 g eines SiO₂-Sols (Levasil 200S, 30%, 15nm, säurestabilisiert) wurden in einer Mischung aus Ethanol (11.85) und 2-propanol (11.12g) dispergiert und für 5 Minuten gemischt. Danach wurden 1.8 ml einer Suspension von TiO₂-Nanopartikeln (5 Gew.-% (90 mg) dispergiert in einer Mischung aus 1 g Wasser und 0.78 g Ethanol) zugegeben und die Zusammensetzung für 2 Stunden gerührt.

### Herstellung der Zubereitung S5G

3.27 g eines SiO₂-Sols (Levasil 200S, 30%, 15nm, säurestabilisiert) wurden in einer Mischung aus Ethanol (11.85) und 2-propanol (11.7g) dispergiert und für 5 Minuten gemischt. Danach wurden 1.8 ml einer Suspension von TiO₂-Nanopartikeln (5.25 Gew.-% (94.5 mg) dispergiert in einer Mischung aus 1 g Wasser und 0.78 g Ethanol) zugegeben und die Zusammensetzung für 2 Stunden gerührt.

### Herstellung der Zubereitung S5H

3.27 g eines SiO₂-Sols (Levasil 200S, 30%, 15nm, säurestabilisiert) wurden in einer Mischung aus Ethanol (11.85) und 2-propanol (11.7g) dispergiert und für 5 Minuten gemischt. Danach wurden 1.8 ml einer Suspension von TiO₂-Nanopartikeln (4.75 Gew.-% (85.5 mg) dispergiert in einer Mischung aus 1 g Wasser und 0.78 g Ethanol) zugegeben und die Zusammensetzung für 2 Stunden gerührt.

### Herstellung der Beschichtungen mit den Zusammensetzungen S5AS5H

Die Zusammensetzungen wurden durch Dip-coating mit einer Geschwindigkeit von 1.7-1.8 mm/s aufgetragen. Die Temperaturbehandlung wurde bei 550 °C für 30 Minuten (Heizrate 5°C/Min.) durchgeführt.

### Herstellung der Zusammensetzung S6

2.65 g (2ml) eines SiO₂-Sols (Levasil 100S, 45%, 30nm, säurestabilisiert) wurden in einer Mischung aus 50:50 Ethanol (14.22) und 2-propanol (14.04g) dispergiert und für 5 Minuten gemischt. Danach wurden 1.8 ml einer Suspension von TiO₂-Nanopartikeln (5 Gew.-% (90 mg) dispergiert in einer Mischung aus 1 g Wasser und 0.78 g Ethanol) zugegeben und die Zusammensetzung für 2 Stunden gerührt.

### Herstellung der Zusammensetzung S7

Die Zusammensetzung wurde analog zu der Zusammensetzung S6 hergestellt. Allerdings unter Verwendung von basenstabilisiertem (Ammoniak) SiO₂-Sol.

### Herstellung der Zusammensetzung S8

Die Zusammensetzung wurde analog zur Zusammensetzung S5 hergestellt. Allerdings unter Verwendung von lyothermisch hergestellten TiO₂-Nanopartikeln (Typ 2).

Es sind zahlreiche Abwandlungen und Weiterbildungen der beschriebenen Ausführungsbeispiele verwirklichbar.

### Liste der zitierten Literatur:

US 2008/0268229 A1

## Patentansprüche

1. Verfahren zur Herstellung von Beschichtungen mit Antireflexionseigenschaften auf einem Substrat, wobei das Verfahren mindestens folgende Schritte umfasst:
a) Herstellen einer Zusammensetzung aus zwei Arten von Nanopartikeln, welche sich mindestens in ihrer Größe unterscheiden, einen mittleren Teilchendurchmesser von mehr als 1 nm und unter 250 nm aufweisen, und mindestens einem Lösungsmittel, ausgewählt aus der Gruppe enthaltend C₁-C₈-Alkohole, C₁-C₈-Ketone, C₁-C₈-Aldehyde und Wasser;
b) Aufbringen der Zusammensetzung auf ein Substrat;
c) Temperaturbehandlung des beschichteten Substrats, wobei es sich bei mindestens einer Art der Nanopartikel um durch eine Karbonsäure stabilisierte Nanopartikel handelt und Schritt b) im Verfahren nur einmal durchgeführt wird, **dadurch gekennzeichnet, dass** die Zusammensetzung mit Karbonsäure stabilisierte SiO₂-Nanopartikel und als weitere Art von Nanopartikel TiO₂-Nanopartikel umfasst, wobei
die Zusammensetzung einen Gesamtgehalt an Nanopartikeln von mehr als 1 Gew.-% aufweist,
das Verhältnis von SiO₂-Nanopartikeln zu den TiO₂-Partikeln nach Gew.-% zwischen 1:1 und 20:1 beträgt, und
die mittlere Teilchengröße der SiO₂-Nanopartikel 2- bis 10-mal größer ist, als die mittlere Teilchengröße der TiO₂-Partikel.

2. Verfahren nach Anspruch 1, **dadurch gekennzeichnet, dass**
die Temperaturbehandlung bei unter 200 °C durchgeführt wird.

3. Verfahren nach Anspruch 1, **dadurch gekennzeichnet, dass**
die Temperaturbehandlung bei über 400 °C durchgeführt wird.

4. Verfahren nach einem der vorhergehenden Ansprüche, **dadurch gekennzeichnet, dass**
das mindestens eine Lösungsmittel ausgewählt ist aus der Gruppe enthaltend C₁-C₈-Alkohole und Wasser.

5. Verfahren nach einem der vorhergehenden Ansprüche, **dadurch gekennzeichnet, dass**
die Zusammensetzung mindestens 2 Lösungsmittel enthält.

6. Verfahren nach einem der vorhergehenden Ansprüche, **dadurch gekennzeichnet, dass**
die Zusammensetzung keine weiteren Additive, wie Benetzungsmittel und/oder Polymere enthält.

## Claims

1. A process for producing coatings with antireflection properties, said process comprising at least the following steps:
a) producing a composition from at least two kind of nanoparticles, which differ in at least in size, have a mean particle diameter of more than 1 nm and less than 250 nm, and at least one solvent selected from the group comprising C₁-C₈-alcohols, C₁-C₈-ketones, C₁-C₈-aldehydes, water;
b) applying the composition to a substrate;
c) thermally treating the coated substrate, wherein at least one kind of nanoparticles comprises nanoparticles stabilized by a carboxylic acid, and step b) is performed only once in the course of performance of the process, **characterized in that** the composition comprises at least SiO₂ nanoparticles stabilized with carboxylic acid and as further kind of nanoparticles TiO₂ nanoparticles,
wherein the composition has a total content of nanoparticles of more than 1% by weight,
the ratio of SiO₂ nanoparticles to the TiO₂ nanoparticles in % by weight is between 1:1 and 20:1, and
the mean particles size of the SiO₂ nanoparticles is 2 to 10 times larger as the mean particles size of the TiO₂ nanoparticles.

2. The process as claimed in claim 1, **characterized in that**
the thermal treatment is performed at below 200°C.

3. The process as claimed in claim 1, **characterized in that**
the thermal treatment is performed at above 400°C.

4. The process as claimed in any of the preceding
claims, **characterized in that** the at least one solvent is selected from the group
comprising C₁-C₈-alcohols and water.

5. The process as claimed in any of the preceding
claims, **characterized in that** the composition comprises at least 2 solvents.

6. The process as claimed in any of the preceding
claims, **characterized in that** the composition does not comprise any further
additives, such as wetting agents and/or polymers.

## Revendications

1. Procédé pour la préparation de revêtements dotés de propriétés antireflet sur un substrat, le procédé comprenant au moins les étapes suivantes :
a) préparation d'une composition composée de deux sortes de nanoparticules, qui se différencient au moins par leur grosseur, présentent un diamètre moyen de particule supérieur à 1 nm et inférieur à 250 nm, et d'au moins un solvant choisi dans le groupe contenant des C₁₋₈-alcools, des C₁₋₈-cétones, des C₁₋₈-aldéhydes et de l'eau ;
b) application de la composition sur un substrat ;
c) traitement de température du substrat revêtu, au moins une sorte de nanoparticules étant des nanoparticules stabilisées par un acide carboxylique et l'étape b) n'étant mise en œuvre qu'une seule fois dans le procédé, **caractérisé en ce que** la composition comprend des nanoparticules de SiO₂ stabilisées par un acide carboxylique et comprend des nanoparticules de TiO₂ en tant que qu'autre sorte de nanoparticules,
la composition présentant une teneur totale en nanoparticules de plus de 1 % en poids,
le rapport de nanoparticules de SiO₂ sur les particules de TiO₂ en % en poids étant compris entre 1:1 et 20:1, et
la grosseur moyenne de particule des particules de SiO₂ étant 2 à 10 fois plus grande que la grosseur moyenne de particule des particules de TiO₂.

2. Procédé selon la revendication 1, **caractérisé en ce que** le traitement de température est mis en œuvre à moins de 200 °C.

3. Procédé selon la revendication 1, **caractérisé en ce que** le traitement de température est mis en œuvre à plus de 400 °C.

4. Procédé selon l'une quelconque des revendications précédentes, **caractérisé en ce que** l'au moins un solvant est choisi dans le groupe contenant des C₁₋₈-alcools et de l'eau.

5. Procédé selon l'une quelconque des revendications précédentes, **caractérisé en ce que** la composition contient au moins 2 solvants.

6. Procédé selon l'une quelconque des revendications précédentes, **caractérisé en ce que** la composition ne contient aucun autre additif, comme des agents mouillants et/ou des polymères.
